(19) Europäisches Patentamt
European Patent Office
Office européen des brevets

(11) **EP 4 399 131 B1**

(12) **EUROPÄISCHE PATENTSCHRIFT**

(45) Veröffentlichungstag und Bekanntmachung des Hinweises auf die Patenterteilung:
**08.10.2025 Patentblatt 2025/41**

(21) Anmeldenummer: **22798065.3**

(22) Anmeldetag: **23.08.2022**

(51) Internationale Patentklassifikation (IPC):
***B60T 13/68*** *(2006.01)*

(52) Gemeinsame Patentklassifikation (CPC):
**B60T 17/22; B60T 8/885; B60T 8/92;**
B60T 2270/402; B60T 2270/403

(86) Internationale Anmeldenummer:
**PCT/EP2022/073463**

(87) Internationale Veröffentlichungsnummer:
**WO 2023/036607 (16.03.2023 Gazette 2023/11)**

(54) **BREMSSYSTEM**

BRAKING SYSTEM

SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2021 DE 202021105878 U**

(43) Veröffentlichungstag der Anmeldung:
**17.07.2024 Patentblatt 2024/29**

(73) Patentinhaber: **IPGate AG**
**8808 Pfäffikon SZ (CH)**

(72) Erfinder:
• **VAN ZANTEN, Anton**
**71254 Ditzingen (DE)**
• **LEIBER, Heinz**
**71739 Oberriexingen (DE)**

(74) Vertreter: **Lenzing Gerber Stute**
**PartG von Patentanwälten m.b.B.**
**Bahnstraße 9**
**40212 Düsseldorf (DE)**

(56) Entgegenhaltungen:
WO-A1-2012/146461      DE-A1- 102017 000 472
DE-A1- 102018 213 306

## Beschreibung

### Stand der Technik

Seit fast 80 Jahren hat sich das heutige 2-Kreis-Bremssystem mit zwei Bremskreisen aus Sicherheitsgründen durchgesetzt und wird abhängig von der Fahrzeug-Konzeption in einer Bremskreisaufteilung

a) diagonal und
b) schwarz/weiß bzw. Vorderachse/Hinterachse

angewendet. Bei einem Bremskreisausfall reduziert sich die Bremswirkung bei a) um 50% und bei b) sogar um bis ca. 70%. In der Statistik wird mit 10 ppm/J für einen Bremskreis-Ausfall gerechnet. Aufgrund der verminderten Bremswirkung bzw. Totalausfall der Bremse ist eine erhebliche Unfallgefährdung gegeben.

DE 10 2017 000472 A1 offenbart eine hydraulische Kraftfahrzeug-Bremsanlage mit redundanter Bremsdruckregelung, und ein Verfahren zum Betreiben und zum Prüfen derselben.

In DE 10 20 2018 213 306 wird ein System mit Erkennung von Bremskreis-ausfall durch Undichtigkeit des Bremskreises beschrieben, indem der Druckgradient ausgewertet wird.

Fast alle Fahrzeuge haben elektronische Bremsregelsysteme für alle vier Fahrzeugräder, die meistens hydraulisch gebremst sind. Jeder Radbremszylinder ist mit mindestes einem oder zwei elektromagnetisch gesteuerten Regelventilen verbunden, welche von einer elektrischen Steuereinheit (ECU) elektrisch angesteuert werden, um z.B. das Rad am Blockieren zu hindern.

Bei heute üblichen Bremssystemen mit ABS/ESP-Funktion sind in der Regel jedem Radbremszylinder jeweils ein Einlass und ein Auslassventil zugeordnet, wobei das Einlassventil meist ein parallel geschaltetes Rückschlagventil aufweist, damit beim schnellen Druckabbau das Einlassventil, welches oft auch als Schaltventil bezeichnet wird, nicht durch den Staudruck schliesst.

Sofern ein Einlassventil mit seinem zugehörigen Rückschlagventil ausfällt und undicht wird, so fällt bei den heutigen 2-Kreis-Bremssystemen bei Ausfall des Radbremszylinders meist ein ganzer Bremskreis aus, so dass sich die Bremswirkung um mindestens 30% reduziert.

### Aufgabe der Erfindung

Aufgabe der Erfindung ist, den Ausfall eines ganzen Bremskreises zu verhindern, sofern lediglich ein Radkreis ausfällt bzw. undicht wird. Unter Radkreis wird hier der Radbremszylinder inklusive dessen hydraulischer Verbindung zum Ventil, z.B. Einlassventil, bis zum Radbremszylinder verstanden. Unter vier Kreis Bremssystem wird hier verstanden ein Bremssystem bei dem bei Ausfall eines Radkreises oder zwei oder drei Radkreise, die anderen drei bzw. zwei Radkreise bzw. ein Radkreis noch funktionsfähig sind bzw. ist.

### Vorteile der Erfindung

Um oben genanntes zu erreichen, müssen möglichst wenig ausfallende Komponenten zwischen der Druckeinspeisung, in die Leitungsverbindung bis zum Ausgang der hydraulischen Steuereinheit eingesetzt werden. Hierzu zählen z.B. Ventile, magnetisch oder auch mechanisch betätigt. Letztlich ist entscheidend, dass am Ende der Leitungsverbindung von der Druckeinspeisung zum jeweiligen Radbremszylinder nur ein einziges Ventil in der Auslegung "normal stromlos offen" verwendet wird. Ein üblich für ABS/ESP eingesetztes Einlassventil hat ein paralleles Rückschlag-Ventil, welches als unsicher in der Dichtigkeit gilt, kann keine Verwendung mehr finden. Wie oben beschrieben, wurde das Rückschlagventil vorgesehen, damit beim schnellen Druckabbau das Einlassventil nicht durch den Staudruck schliesst.

Unter dem erfindungsgemäßen Ventil SV2k wird das einem Radbremszylinder zugeordnete Ventil verstanden, über das zum Druckaufbau in nur diesem Radbremszylinder Hydraulikmedium fließt. Unter Radkreis wird hier dann der Radbremszylinder inklusive der hydraulischen Verbindung vom Ventil bis zum Radbremszylinder verstanden. Selbstverständlich kann auch zum Druckabbau das Hydraulikmedium aus dem zugeordneten Radbremszylinder durch das Ventil SV2k zurück in den Bremskreis BK1 bzw. BK2 strömen.

Die Erfindung setzt zur Vermeidung der oben beschriebenen Probleme ein Ventil SV2k bzw. ein Schaltventil vom Typ "normal stromlos offen" ein, dessen Ventilstellglied mittels eines ersten elektromagnetischen Antriebes von der geöffneten Ventilstellung in die geschlossene Ventilstellung, bei der das Ventilstellglied gegen einen Ventilsitz gedrückt wird, verstellt. Bei nicht bzw. nicht hinreichend bestromten elektromagnetischen Antrieb, drückt eine Ventilfeder das Ventilstellglied in die Ausgangsposition, d.h. in die geöffnete Ventilstellung. In der geöffneten Ventilstellung sieht die Erfindung eine Kraftzusatzeinrichtung vor, die eine zusätzliche Kraft auf das Ventilstellglied erzeugt, welche in Richtung der geöffneten Ventilstellung gerichtet ist und somit die Ventilfeder unterstützt oder ersetzt, so dass sich eine erhöhte resultierende Kraft ergibt, mit der das Ventilstellglied in die geöffnete Ventilstellung kraftbeaufschlagt ist.

Die Kraftzusatzeinrichtung kann schaltbar, z.B. durch einen zum eigentlichen Ventilantrieb zusätzlichen Elektromagneten gebildet sein. Sie kann damit auch als aktive Kraftzusatzeinrichtung bezeichnet werden, da die zusätzlich auf das Ventilstellglied erzeugt Kraft wahlweise und je nach Zustand des Bremssystems zu- oder abgeschaltet werden kann. Es ist jedoch ebenso möglich, dass die Kraftzusatzeinrichtung passiv wirkt, z.B. durch Verwendung eines Permanentmagneten. Es ist auch im Sinne der Erfindung, wenn die Kraftzusatzeinrichtung über einen Elektromagneten sowie einen Permanentmagneten verfügt. In allen vorbeschriebenen Ausführungsformen wird vorteilhaft mittels der Kraftzusatzeinrichtung eine die Ventilfeder unterstützende Kraft auf das Ventilstellglied ausgeübt, um dieses in seiner geöffneten Stellung zu halten, damit das Ventil nicht ungewollt zuzieht.

Bei einer lediglich aktiven Kraftzusatzeinrichtung muss zum Schließen des Ventils SV2k dessen Antrieb somit lediglich gegen die Kraft der Ventilfeder wirken, die aufgrund der schaltbaren Kraftzusatzeinrichtung kleiner dimensioniert werden kann, womit das Ventil SV2k sicher schließt und die Dichtheit durch eine hohe Andruckkraft gewährleistet ist.

Bei einer rein passiven Kraftzusatzeinrichtung muss der eigentliche Stellantrieb des Ventils SV2k lediglich am Anfang der Hubbewegung aus der geöffneten in Richtung geschlossener Stellung eine erhöhte Kraft aufbringen, um die passiv und damit dauerhaft wirkende Zusatzkraft zu überwinden. Mit zunehmend größer werdendem Luftspalt wird die Kraft der passiven Kraftzusatzeinrichtung schnell abnehmen und sich in der geschlossenen Stellung des Ventils weniger stark auswirken.

Denn das Ventil SV2k ist das Sicherheitstor für die Bremskreise BK zum Radbremszylinder RZ. Fällt bei dem erfindungsgemäßen Bremssystem eine der vier hydraulischen Verbindungen von der hydraulischen Steuereinheit zu einem Radbremszylinder aus, oder bei Undichtigkeit des Radbremszylinders, so kann durch das erfindungsgemäße Ventil SV2k die fehlerhafte hydraulische Verbindung bzw. der fehlerhafte Radbremszylinder, vom restlichen Bremssystem mit hoher Sicherheit abgekoppelt werden.

Die Kraftzusatzeinrichtung muss nur dann eingeschaltet werden bzw. wirken, wenn ein schneller Druckabbau erfolgen muss. In allen anderen Betriebszuständen des Bremssystems ist die zusätzliche Halte- bzw. Unterstützungskraft der Kraftzusatzeinrichtung nicht erforderlich, so dass vorteilhaft Energie eingespart werden kann. Damit fällt beim erfindungsgemäßen Bremssystem bei Ausfall eines Radkreises lediglich die Bremswirkung dieses einen ausgefallenen Radkreises weg, wobei die Bremswirkung der restlichen drei Radkreise weiter zur Verfügung steht. Es ergibt sich somit nur noch eine Reduktion der Bremswirkung von vier auf drei intakten Radkreise, so dass im Falle des Ausfalls eines Radkreises an der Vorderachse nur ca. 35% Verlust an Bremswirkung zu verzeichnen ist im Gegensatz zu 70%, wie oben beschrieben für eine schwarz/weiß Bremskreisaufteilung, wenn stets ein ganzer Bremskreis und somit zwei Radkreise ausfällt.

Das zuvor beschriebene Ventil wird sowohl alleine als auch in Kombination mit dem nachfolgend beschriebenen Bremssystem beansprucht. Das nachfolgend beschriebene erfindungsgemäße Bremssystem sollte vorteilhaft mit dem zuvor beschriebenen Ventil ausgestattet werden. Es ist jedoch auch denkbar, dass das erfindungsgemäße Bremssystem mit einem andersartigen Ventil betrieben wird.

Das erfindungsgemäße Bremssystem weist somit vier Radkreise aus, bei denen jeweils zwei Radkreise einem Bremskreis zugeordnet sind. Fällt ein Radkreis aus, so stehen vorteilhaft weiter drei Radkreise für die Bremswirkung zur Verfügung.

Die Funktionssicherheit des erfindungsgemäßen Bremssystems kann bei Schmutzpartikel in der Bremsflüssigkeit zusätzlich durch den Einbau mindestens eines Filters mit kleiner Maschenweite am Ein- und/oder Ausgang des Ventils erhöht werden. Die Maschenweite sollte so klein gewählt werden, dass diese kleinen Schmutzpartikel bei geschlossenem Ventil SV2k nur kleine Undichtigkeiten und damit nur kleine Durchflussmengen erzeugen, welche von der Druckversorgung ausgeglichen werden können, aber welche von der Diagnose sowohl über die Fördermenge der Druckversorgung als auch über das Niveau im Vorratsbehälter erkannt werden können.

Um die Funktion des erfindungsgemäßen Ventils SV2k zu überprüfen, kann z.B. bei der Diagnose eine Messung der Volumenaufnahme und des zeitlichen Verlaufs des Druckes in dem jeweiligen Radkreis und ein Vergleich mit der zuvor ermittelten Druck-Volumen-Kennlinie des Radkreises durchgeführt werden. Die Diagnose kann dabei bei jeder Bremsung und/oder auch im Stillstand oder beim Service durchgeführt werden.

Das Ventil SV2k kommt, wie oben beschrieben, ohne Rückschlagventil aus, und wird dennoch den verschiedensten Anforderungen gerecht. So muss es auch bei grossen Durchflussraten in beiden Richtungen sicher geöffnet bleiben, d.h. die heutige Ventil-typische Schwachstelle, dass bei grossen Durchflussraten durch Effekte am Ventilsitz eine Kraft auf den Ventilkegel und Ventilfeder wirkt und das Ventil selbsttätig schliesst, darf nicht auftreten.

Vorteilhaft kann durch eine entsprechende Gestaltung des Dichtkegels, der Dimensionen der Rückstellfeder und des Ventilstößels, zusätzlich zu der Kraftzusatzeinrichtung das Ventil SV2k optimiert werden. In der Schliessstellung des Ventils, welches auch Einlassventil genannt werden kann, über das aber auch der Druck im Radbremszylinder abgebaut werden kann, sollte die Aufdrückkraft deutlich kleiner als bei Einsatz einer progressiven Feder sein, die in dieser Stellung eine höhere Kraft als in der Öffnungsstellung besitzt, was für die Dimensionierung des Magnetkreises wegen entsprechend höherem Kraftbedarf ungünstig ist.

Das erfindungsgemäße Bremssystem kann verschiedene Ventilschaltungen aufweisen:

a) Vier Ventile SV2k für jeweils vier Radbremszylinder, über die sowohl der Druckaufbau als auch der Druckabbau für die jeweils zugeordneten Radbremszylinder erfolgt;

b) vier Ventile SV2k für jeweils vier Radbremszylinder sowie zwei Auslassventilen;

c) vier Ventile SV2k und vier Auslassventile.

Bei Verwendung eines Auslassventils für einen Radkreis ist eine radindividuelle Regelung von Druckaufbau Pauf und Druckabbau Pab möglich. Sollte eine Undichtigkeit in einem Radkreis auftreten, kann vorteilhaft eine Diagnoseschaltung den fehlerhaften Radkreis sowohl beim Bremsen als auch beim Parken identifizieren und das zum Radkreis gehörende Ventil SV2k schliessen, sodass bei diesem Einfachfehler weiter drei Radkreise und beim Doppelfehler, d.h. wenn zwei Radkreise gleichzeitig ausfallen, zwei Radkreise im "Worst Case" zur Verfügung stehen. Bei herkömmlichen Bremssystemen folgt hingegen im "Worst Case" ein Totalausfall der Bremse.

Zusammenfassend lässt sich somit festhalten, dass durch geringe Änderungen am Einlassventil und den Wegfall des Rückschlagventils mit dem Ventil SV2k vorteilhaft ein hoher Sicherheitsgewinn erzielbar ist. Bei entsprechend konstruktiver Gestaltung des Ventils SV2k ist zusätzlich zu dem Sicherheitsgewinn eine Kostenreduzierung möglich.

Das erfindungsgemäße Bremssystem kann auch derart ausgebildet sein, dass anstatt vier hydraulischen Radkreisen ein gemischtes hydraulisch-elektrisches Bremssystem mit z.B. hydraulischen Leitungen zu den hydraulisch arbeitenden Vorderradbremsen und lediglich elektrischen Verbindungen zu den elektromotorisch arbeitenden Bremsen (EMB) an der Hinterachse, deren Aufbau bekannt ist. Auch hier ergeben sich die gleichen Vorteile, wenn die hydraulischen Radkreise entsprechend der vorbeschriebenen Ausführungen ausgebildet werden.

Neben den beschriebenen Ventilkonzepten sind auch unterschiedliche Konzepte der Druckversorgung möglich, z.B. eine einzelne Druckversorgung für Level 2 des automatisierten Fahrens oder zwei Druckversorgungen für Level 3 bis Level 5 des automatisierten Fahrens, wobei die zweite, redundante, Druckversorgung eine Kolbenpumpe oder eine Rotationspumpe enthalten kann. Die Rotationspumpen haben einen deutlichen Kostenvorteil. Bei der Kolbenpumpe kann am Ausgang der Druckversorgung anstelle des Magnetventils ein einfaches Rückschlagventil verwendet werden, welches dieselben Vorteile bei Ausfall der Druckversorgung hat und kostengünstiger ist. Bei diesem Bremssystem kann der Druckabbau bei der Normalbremsung nicht über die Steuerung des Kolbens der Druckversorgung erfolgen, sondern über die Steuerung der Auslassventile mit Verwendung des Druckgebersignals des Druckgebers oder auch des Druckgebers. Da mindestens zwei Auslassventile AV verwendet werden, ist auch ein redundanter Druckabbau gegeben. Je nach Anforderung der Druckabbaugeschwindigkeit und nach der Anzahl der Auslassventile AV können ein, zwei oder mehr Auslassventile AV geöffnet werden.

Zur Abtrennung der Druckversorgung von den Bremskreisen können Magnetventile vorgesehen werden. Es ist jedoch auch möglich auf derartige Abtrennungsventile zu verzichten, wenn die Druckversorgung mit einem Antrieb mit redundanter Wicklungsbeschaltung, z.B. 2x3-Phasen und/oder redundanter Ansteuerung, versehen ist, derart, dass zwischen den den Radkreisen zugeordneten Schaltventilen $SV2K_{1-4}$ und der Druckversorgung DV keine weiteren Ventile vorgesehen sind. Um hierbei einen Ausfall des Bremssystems, z.B. durch eine undichte Kolbendichtung oder kleines Kolbenspiel zu verhindern, erfolgt eine Kompensation durch Nachförderung.

Vorteilhaft kann bei den vorbeschriebenen Bremssystemen die übliche Fahrzeugabstimmung in verschiedenen Bereichen wie Logistik, Service und Homologation entfallen.

**Figurenbeschreibung**

Nachfolgend werden anhand von Zeichnungen verschiedene mögliche Ausführungsformen des erfindungsgemäßen Bremssystems und der eingesetzten Ventile näher erläutert.

Es zeigen:

Fig. 1: zeigt den Aufbau eines erfindungsgemäßen Bremssystems mit vier hydraulischen Radbremsen, die über vier hydraulischen Leitungen mit der Hydraulikeinheit verbunden sind, wobei diese neben den vier den Radbremsen jeweils zugeordneten erfindungsgemäßen Ventile SV2k noch zusätzliche Ventile aufweist;

Fig. 1a: zeigt einen typischen Bremsdruckverlauf in einem ABS-Regelzyklus;

Fig. 1b: zeigt den Aufbau eines gemischten Bremssystems mit hydraulisch betätigten Bremsen an der Vorderachse und elektrisch betätigten Bremsen an der Hinterachse;

Fig. 2:  zeigt den prinzipiellen Aufbau eines Ventils SV2k mit einer Kraftzusatzeinrichtung;

Fig. 2a:  zeigt den Kraftverlauf der Kraftzusatzeinrichtung über den Ventilankerhub;

Fig. 2b:  zeigt den Kraftverlauf der elektromagnetische Ventilkraft und die Kraft der Rückstellfeder über den Ventilankerhub;

Fig. 2c:  zeigt den elektrischen Ventilstrom bei Stromsteuerung, den Kraftverlauf der elektromagnetische Ventilkraft bei der Stromsteuerung und die Kraft der Kraftzusatzeinrichtung über den Ventilankerhub;

Fig. 2d:  zeigt das Ventil SV2k gemäß Figur 2 in konstruktiver Darstellung als Modifikation eines Standartventils;

Fig. 3a bis 3d:  verschiedene mögliche Ventilschaltungen für das erfindungsgemäße Bremssystem mit vier Radkreisen;

Fig. 4a:  einen Diagnoseablauf während einer Bremsung für das erfindungsgemäße Bremssystem;

Fig. 4b:  einen Diagnoseablauf während des Fahrzeugstillstands;

Fig.4c:  einen Diagnoseablauf bei Undichtigkeit in einem Radbremszylinder und einer Undichtigkeit in dem Ventil SV2k.

Fig. 4d:  einen ersten alternativen Diagnoseablauf für Einzelfehler während einer Bremsung oder während des Fahrzeugstillstands für das erfindungsgemäße Bremssystem;

Fig. 4e:  einen zweiten alternativen Diagnoseablauf für Einzelfehler während einer Bremsung oder während des Fahrzeugstillstands für das erfindungsgemäße Bremssystem;

Fig. 4f:  einen auf den ersten alternativen Diagnoseablauf aufbauende Diagnoseablauf für Doppelfehler während einer Bremsung oder während des Fahrzeugstillstands für das erfindungsgemäße Bremssystem;

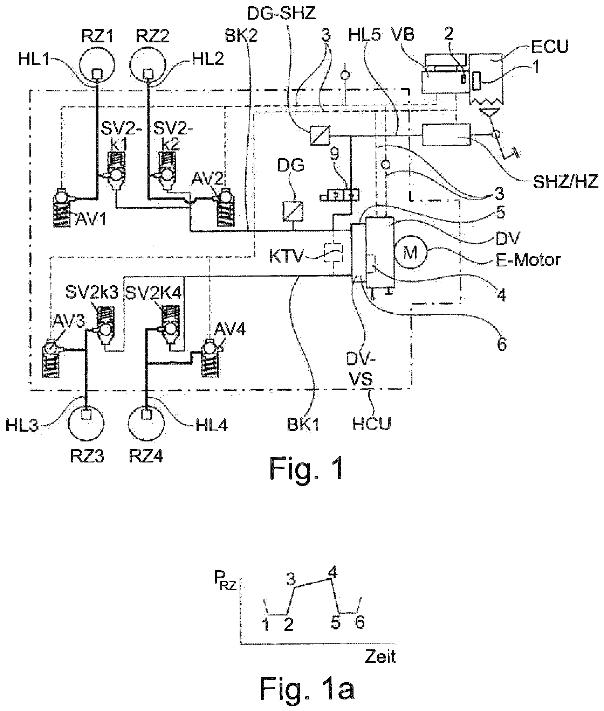

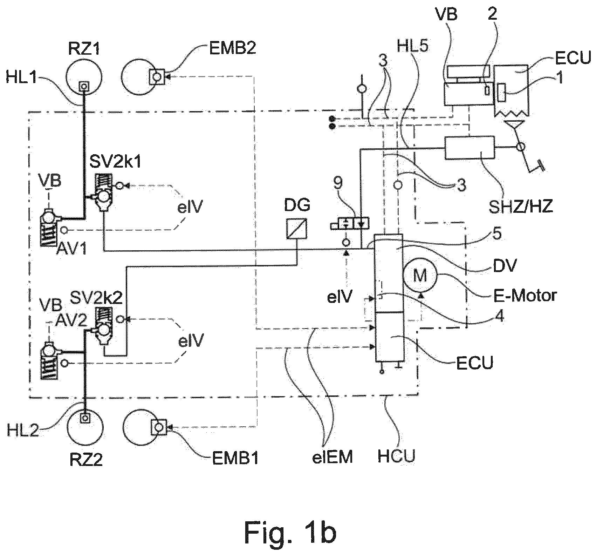

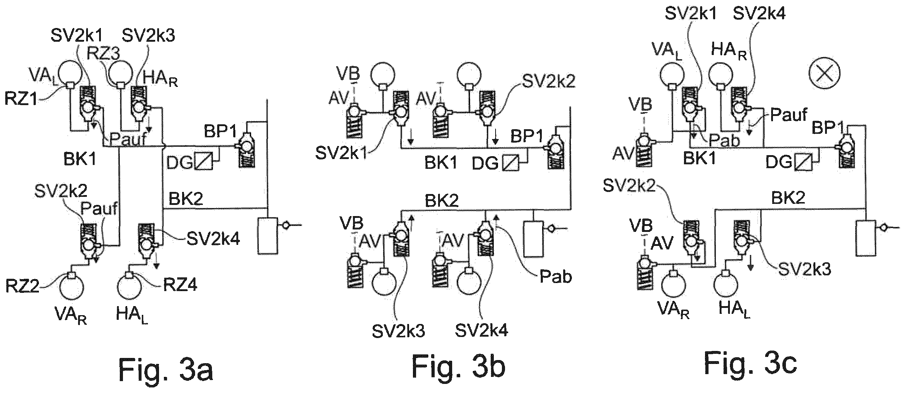

Fig.1 zeigt den vereinfachten Aufbau eines erfindungsgemäßen Bremssystems mit vier Radkreisen mit den hydraulischen Verbindungen HL1 - HL4 zwischen den Radbremszylindern RZ1 - RZ4 und den Ventilen SV2k1 - SV2k4. Hier besteht z.B. Radkreis 1 aus Radbremszylinder RZ1 und hydraulische Leitung HL1. Die Auslassventile können optional vorgesehen werden, wobei sowohl ein, zwei oder auch vier Auslassventile vorgesehen sein können. Die hydraulischen Verbindungen zwischen den optionalen Auslassventilen AV und dem Vorratsbehälter VB sind gestrichelt dargestellt. Die Ventile SV2k haben eine hydraulische Verbindung zur Druckversorgung DV über die Bremskreise BK1 und BK2. Die Bremskreise BK1 und BK2 können wahlweise über ein stromlos offenes Kreistrennventil KTV, welches in Fig. 3a - Fig. 3c mit der Bezeichnung BP1 im Aufbau genauer dargestellt ist, miteinander verbunden werden. Dieses Kreistrennventil KTV kann aus Sicherheitsgründen auch als 3/2-Wege-Ventil ausgeführt werden, wobei dabei an den einen Anschluss des Ventils die Druckversorgung DV und die beiden anderen Anschlüsse mit den beiden Bremskreisen verbunden sind, so dass wahlweise die Druckversorgung mit dem einen oder mit dem anderen Bremskreis BK1 bzw. BK2 verbindbar ist. Bekanntlich werden als Druckversorgung DV Kolbenpumpen mit sogenannten ungestuften Einfachhubkolben und Stufenkolben als Doppelhubkolben mit Vor- und Rückhub eingesetzt. Die Druckversorgung DV mit Einfachhubkolben hat nur einen Druckausgang während die Druckversorgung DV mit Doppelhubkolben zwei Druckausgänge hat. Eine Druckversorgung DV mit nur einem Druckausgang kann z.B. durch eine motorisch angetriebene Kolben-Zylindereinheit mit nur einem Druckraum oder aber z.B. auch durch eine Rotationspumpe gebildet sein. Eine Druckversorgung DV mit zwei Druckausgängen kann z.B. durch eine motorisch angetriebene Doppelhubkolbenpumpe mit zwei Druckräumen gebildet sein, wobei dann jeder Druck- bzw. Arbeitsraum mit einem Ausgang verbunden ist bzw. diesen bildet. Die Druckversorgung DV mit Doppelhubkolben wird vorteilhaft für kontinuierliche Förderung eingesetzt und hat auch im Fehlerfall beim vier Kreis Bremssystem Vorteile beim Nachfördern zum Leckausgleich. Die Druckversorgung DV mit Doppelhubkolben benötigt für den Hin- und Rückhub eine Ventilschaltung. Beide Kolbentypen nutzen auch wahlweise das Kreistrennventil KTV zum Trennen der beiden Bremskreisen BK1 und BK2. Beim vier Kreis Bremssystem mit SV2k als Sicherheitsventil und beim sicheren n Kreis Bremssystem kann wiederum auf das Kreistrennventil KTV und auf die zweikreisige Einspeisung von der Druckversorgung DV verzichtet werden. Mit den Vorteilen in der Sicherheit vom Ventil SV2k bei Ausfall eines Radkreises RK1, ..., RK4 kann bei Verzicht auf Doppelfehlersicherheit, z.B. Undichtigkeit von Radbremszylinder 1 und Undichtigkeit von Ventil SV2k1, auf das Ventil KTV verzichtet werden.

Sofern eine Druckversorgung mit nur einem Ausgang verwendet wird, wird das Ventil KTV dazu verwendet, um die Druckversorgung wahlweise mit den Bremskreisen BK1 und BK2 zu verbinden oder von diesen abzukoppeln. Wird dagegen eine Druckversorgung mit zwei Ausgängen verwendet, so wird an jeden Ausgang der Druckversorgung DV jeweils ein Bremskreis BK1 bzw. BK2 angeschlossen, wobei dann das Kreistrennventil KTV zur wahlweisen Verbindung bzw. Trennung der beiden Bremskreise BK1 und BK2 dient, wie es in Figur 1 dargestellt ist. Die Druckversorgung DV weist vorzugsweise einen EC-Motor mit ein oder zwei Phasen und entsprechender Anzahl von Wickelungssteuerungen auf, so dass ein redundanter Betrieb gewährleistet ist. Es können ein oder zwei Druckgeber DG zur Ermittlung des IST-Druckes, Pist, in den beiden Bremskreisen BK1, BK2 vorgesehen werden. Der Hauptbremszylinder kann wahlweise als Single-Hauptbremszylinder SHZ oder als Tandem-Hauptbremszylinder THZ ausgebildet sein, über den bei Ausfall der Druckversorgung DV ein Druck mittels des Bremspedals erzeugbar ist. Am Hauptbremszylinder HZ kann der Vorratsbehälter VB angeschlossen bzw. angeordnet sein, welcher über einen Schwimmer mit daran angeordnetem Sensortarget 2 verfügt, wobei ein in der Steuer- und Regeleinheit ECU das Sensorelement 1 vorgesehen ist, um den Füllstand des Vorratsbehälters zu detektieren.

Fig. 1a zeigt den typischen Bremsdruckverlauf $P_{RZ}$ bei einem Standard-ABS-Regelzyklus in einem Radbremszylinder. Zum Zeitpunkt 1, nach einer Bremsdruckreduzierung aufgrund eines instabilen Radschlupfes, wird der Bremsdruck bis zum Zeitpunkt 2 konstant gehalten, damit sich ein stabiler Radschlupf einstellen kann. Zum Zeitpunkt 2 ist ein stabiler Radschlupf erreicht und der Bremsdruck wird schnell, d.h. mit einem großen Gradienten, erhöht, mit dem Ziel, schnell wieder an das Maximum der Bremskraft zwischen Reifen und Fahrbahn zu gelangen. Zum Zeitpunkt 3 ist die Bremskraft knapp unterhalb der maximalen Bremskraft zwischen Reifen und Fahrbahn. Der Bremsdruck wird nun langsam, d.h. mit einem kleinen Gradienten erhöht, damit die Bremskraft lange in der Nähe vom Maximum der Bremskraft zwischen Reifen und Fahrbahn bleibt. Zum Zeitpunkt 4 ist die Bremskraft zwischen Reifen und Fahrbahn trotz steigendem Bremsdruck abgefallen. Das Rad verzögert sich stark, der Radschlupf ist instabil und der Druck wird durch Öffnung des Auslassventils AV reduziert. Zwischen den Zeitpunkten 4 und 5 muss der Bremsdruck sehr schnell reduziert werden, d.h. mit einem großen Gradienten, da der Radschlupf in diesem Zeitabschnitt instabil ist und sehr schnell größer werden kann. Zum Zeitpunkt 5 beschleunigt das Rad wieder, wobei der Druck konstant gehalten wird, damit sich wieder ein stabiler Radschlupf einstellen kann. Zum Zeitpunkt 6 ist ein stabiler Radschlupf erreicht und der Bremsdruck kann wieder erhöht werden. Der kleine Gradient des Bremsdrucks zwischen den Zeitpunkten 3 und 4 wird mit einer elektrischen Stromsteuerung oder Stromregelung der Ventile SV2k erreicht. Dazu sind die Anschlüsse der Ventile wie in Fig. 1 dargestellt zwingend erforderlich. Der Bremsdruckgradient zwischen den Zeitpunkten 4 und 5 ist abhängig vom Bremsdruck im Radbremszylinder, d.h. bei hohem Druck im Radbremszylinder $P_{RZ}$ ist der Gradient groß und bei kleinem Druck im Radbremszylinder $P_{RZ}$ ist der Gradient klein. Bei kleinen Bremsdrücken in dem Radbremszylinder, z.B. $P_{RZ}$ = 10bar, soll für einen großen Gradienten der hydraulische Widerstand des Auslassventils AV gering sein. Für große Bremsdrücke in dem Radbremszylinder, z.B. $P_{RZ}$ = 100bar, soll für eine genaue Druckeinstellung und für ein geringes Geräusch, der Gradient nicht zu groß und der hydraulische Widerstand des Auslassventils AV größer sein. Hieraus folgt, dass der hydraulische Widerstand des Auslassventils stets nur ein Kompromiss sein kann.

Wie bereits erwähnt, wird der kleine Gradient des Bremsdruckaufbaus im Radbremszylinder zwischen den Zeitpunkten 3 und 4 mit einer elektrischen Stromsteuerung oder Stromregelung der Ventile SV2k erreicht. Dazu sind die hydraulischen Anschlüsse der Ventile SV2k, wie in Fig. 1, z.B. SV2k1, dargestellt, zwingend erforderlich.

Bei der Gradientensteuerung des Bremsdruckaufbaus in z.B. Radbremszylinder RZ1 wird der hydraulische Widerstand des Ventils SV2k1 mittels elektrischer Stromsteuerung oder Stromregelung beeinflusst. Bei offenem Ventil SV2k1 strömt bei Bremsdruckaufbau in den Radbremszylinder RZ1, Volumen von Bremskreis BK1 in den Radbremszylinder RZ1. Dabei strömt das Volumen durch den engen Ventilspalt zwischen Ventilanker (Kugel in der Figur von SV2k1) und Ventilsitz des Ventils SV2k1. Dadurch ist der Bremsdruck vor dem Ventilspalt, d.h. auf der Seite des Bremskreises BK1, größer als nach dem Ventilspalt. Diese Druckdifferenz wirkt auf den Ventilanker wodurch eine Druckdifferenzkraft auf den Ventilanker ausgeübt wird, welche in Richtung Ventilöffnung wirkt. Wird das Ventil SV2k1 bestromt, dann entsteht eine Magnetkraft auf den Ventilanker in Richtung der Schließstellung des Ventils. Durch diese Magnetkraft bewegt sich der Anker in Richtung Ventilschließen und der Ventilspalt wird kleiner, wodurch der Volumenstrom und damit der Druckaufbaugradient in Radbremszylinder RZ1 abnimmt. Je größer der elektrische Strom auf das Ventil SV2k1, desto kleiner ist der Bremsdruckaufbaugradient in Radbremszylinder RZ1. Auf diese Weise lässt sich der Bremsdruckaufbaugradient in Radbremszylinder RZ1 durch Stromsteuerung oder Stromregelung des Ventils SV2k1 beeinflussen.

Fig. 1b zeigt ein gemischtes Bremssystem mit hydraulisch betätigten Bremsen an der Vorderachse und elektrisch betätigten Bremsen EMB an der Hinterachse. Die hydraulische Schaltung der Vorderachse mit den SV2k-Ventilen ist identisch zu der Ausführungsform gemäß Figur 1, mit einfachen Verbindungen zur Druckversorgung DV. In der Verbindungsleitung HL5 ist ein zusätzliches Trennventil zum Einfach-Hauptzylinder SHZ angeordnet, welches auch bei der in Fig. 1 dargestellten Ausführungsform vorgesehen werden kann. Dieses Ventil ist im Normalbetrieb geschlossen.

Die Druckversorgung DV ist von einem EC-Motor angetrieben, welcher vorzugsweise redundant angetrieben wird über eine 2x3 Phasen Wicklungssteuerung. Damit kann bei einem Einfachfehler in einer Wicklung noch ca. 70% der Bremswirkung bereitgestellt werden.

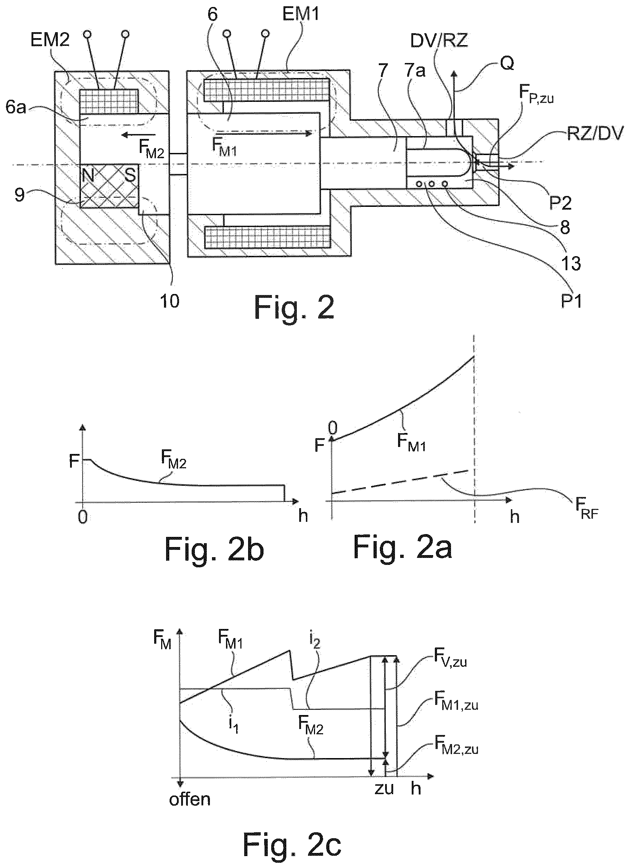

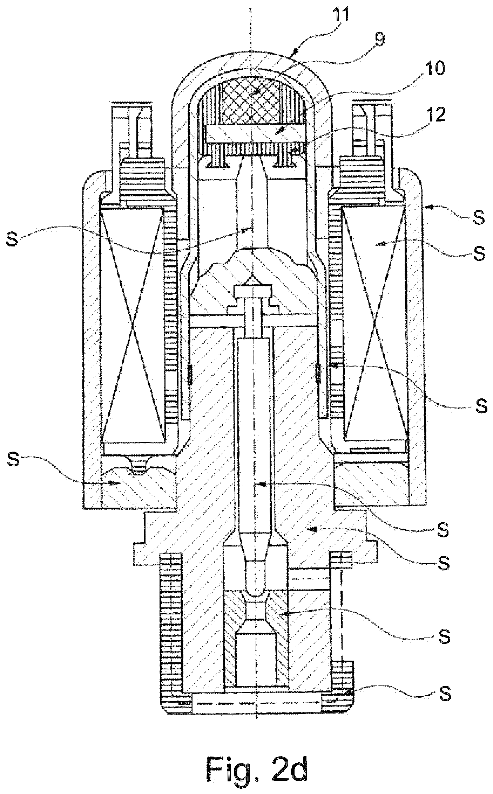

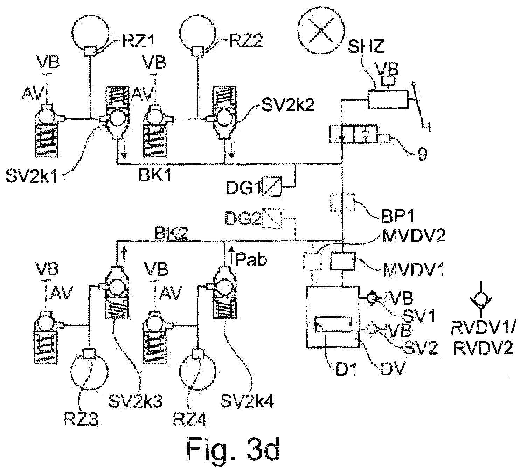

Fig. 2 zeigt das für die in den vorbeschriebenen Ausführungsformen benötigte spezielle Ventil SV2k, welches in beiden Durchflussrichtungen sicher funktioniert, d.h. auch bei z.B. grossen Durchflussmengen, wie z.B. 100cm$^3$/s - 120cm$^3$/s, und großen Druckdifferenzen über das Ventil, wie z.B. 160bar - 220bar. Insbesondere für die vorbeschriebenen Bereich ist bei diesem Ventil SV2k sichergestellt, dass es nicht selbsttätig schliessen. Das erfindungsgemäße Ventil SV2k hat den typischen Aufbau eines Magnetventils mit Elektromagnetischem Kreis EM1 mit Anker 6, Ventilstellglied bzw. Ventilstössel 7 und Ventilsitz 8 sowie der Rückstellfeder 13. Auf die Rückstellfeder 13 kann verzichtet werden, wenn die Kraftzusatzeinrichtung, welche in Figur 2 durch den elektromagnetischen Kreis EM2 gebildet ist, entsprechend ausgebildet ist. Der Ventilantrieb EM1 erzeugt (siehe Figur 2a) über den Hub h eine starke progressive Kraft FM1 und die Rückstellfeder 13 zur Rückstellung des Ankers eine über den Hub h progressive Rückstellkraft FRF. Der Anker 6 ist im linken Bildteil von Fig. 2 mit einem zweiten krafterzeugenden Element gekoppelt, welches die erfindungsgemäße Kraftzusatzeinrichtung bildet. Dieses kann aus einem zweiten elektromagnetischem Kreis EM2 mit Anker 6a bestehen, dessen schaltbare Kraft FM2 der Kraft FM1 des ersten magnetischen Kreises EM1 entgegenwirkt. Als kostengünstigere Variante kann auch ein permanentmagnetischer Kreis als passive Kraftzusatzeinrichtung eingesetzt werden, bestehend aus kleinem Permanentmagneten 9 mit Polplatte 10. Die Kraftwirkung von FM2 wirkt FM1 entgegen und wirkt mit relativ starker Kraft bei offenem Ventil mit starkem gewünschtem Abfall der Kraft über dem Hub h. Die Kraft FM2 ist (siehe Figur 2b) bei Hubende immer noch gross genug, um die übliche Ankerrückstellung zu übernehmen, und kann somit die übliche Rückstellfeder 13 ersetzen. Figur 2c zeigt das Zusammenwirken der Kraftquellen FM1 als Funktion der Stromstärke und FM2 beim Permanentmagneten. Am Ventilsitz wirkt in geschlossener Ventilstellung die Druckdifferenz P2-P1 mit der Kraft FP,zu welcher in Richtung Ventilöffnung gerichtet ist, wenn der Druck P2 größer als der Druck P1 ist. Am Ventilsitz wirkt in offener Ventilstellung durch den Volumenstrom Q durch das Ventil die beschriebene hydraulische Kraft FH, welche das Ventil ohne Gegenmassnahmen zureißen kann, sowohl beim Druckaufbau Pauf und auch beim Druckabbau Pab je nachdem wie das Ventil SV2k an die Druckversorgung DV und die Radbremszylinder RZ angeschlossen ist, und je nachdem in welcher Richtung die Volumenströmug läuft, was in den nachfolgenden Figuren 3 bis 3b näher erläutert wird.

Die hydraulische Kraft auf den Ventilanker FH welche bei Durchströmung des Ventils mit Volumenstrom Q wirkt, wirkt jeweils in der Offenstellung des Ventils. Deshalb soll vor allem in dieser Stellung die Kraft der Kraftzusatzeinrichtung FM2 wirken und deshalb kann sie, wegen der abfallenden Kraft von FM2 über der Ankerbewegung in Richtung Ventil schließen, damit in der Offenstellung höher dimensioniert werden als bei Verwendung einer Feder mit ansteigender Kraft FRF bei der Ankerbewegung in Richtung Ventil schließen.

Der Ventilstössel 7 kann auch eine spezielle Form aufweisen, welche die Gegenkraft durch hydraulische Strömungskräfte liefert und die Zuziehkraft reduzieren kann.

Figur 2c zeigt die elektrische Ansteuerung des Ventils i. Die Stromstärke i1 wird in geschlossener Ventilstellung so gewählt, dass FM1 größer FM2 ist. Der Strom kann dann in geschlossener Stellung des Ventils, i2, variiert werden, abhängig vom hydraulischen Differenzdruck P2-P1 über das Ventil. Da die Kraft FM2 aus beschriebenen Gründen in dieser Stellung im Bereich der üblichen Federkraft liegt, kann das Ventil auch z.B. mit einer Stromsteuerung oder Stromregelung betrieben werden. Um das Ventil in geschlossener Stellung zu halten, muss die Differenzkraft

$$FV,zu = FM1,zu - FM2,zu$$

größer sein als die Kraft FP, welche aus dem Differenzdruck P2-P1 über das Ventil in geschlossener Stellung resultiert.

Fig. 2d zeigt die konstruktive Ausführung des erfindungsgemäßen Schaltventils SV2k auf der Basis eines Serieneinlassventils. Die im Serienteil entsprechend vorhandenen Teile sind alle mit S bezeichnet. Das beim Serienventil integrierte Rückschlagventil entfällt. Nur vier Teile werden zusätzlich für die Kraftzusatzeinrichtung benötigt. Dies sind

1. Der Permanentmagnet 9

2. die Polplatte 10

3. der elektromagnetische Rückschluss 11 und

4. ein Kunststoffkörper 12, welcher die Teile miteinander inkl. Anker verbindet.

Die Fig. 3a-3d zeigen verschiedene Ventilschaltungen für die ABS/ESP Funktionen, welche abhängig von dem System der Druckregelung für Druckaufbau Pauf und Druckabbau Pab sind. Die jeweiligen Ausführungsformen unterscheiden sich jeweils in der Anzahl der Ventile, wobei das Differenzierungsmerkmal das Auslassventil AV und damit die Druckabbau-Steuerung ist. Die Pfeile zeigen jeweils die Volumenströme, bei der die Gefahr des Zuziehens des Ventils SV2k1, ..., SV2k4 besteht. Unter Zuziehen oder Zureissen des Ventils versteht man das selbsttätige Schließen des stromlos offenen Ventils durch eine Volumenströmung durch das Ventil. Beispielhaft ist in Fig. 3a der Druckaufbau Pauf in Radbremszylinder 2, RZ2, dargestellt, bei dem Hydraulikvolumen aus dem Bremskreis BK1 durch das offene Ventil SV2k2 in den Radbremszylinder 2, RZ2, strömt. Bei offenem Ventil $SV2k_2$ strömt das Volumen durch den engen Ventilspalt zwischen Ventilanker (Kugel in der Figur 2 von $SV2k_2$) und Ventilsitz. Dadurch ist der Bremsdruck vor dem Ventilspalt größer als hinter dem Ventilspalt. Diese Druckdifferenz wirkt auf den Ventilanker, wodurch eine Druckdifferenzkraft auf den Ventilanker ausgeübt wird, welche in Richtung Ventilschließung wirkt. Wenn diese Druckdifferenzkraft größer ist als die Kraft, welche die Ventilfeder auf den Ventilanker ausübt, dann schließt das Ventil, was als Zuziehen des Ventils durch Volumenströmung bezeichnet wird. Dieses selbsttätige Schließen ist ungewollt, weil das Ventil nicht zum Schließen angesteuert wird.

Fig. 3b zeigt eine Ventilschaltung ähnlich wie in Fig. 1a dargestellt, womit eine Standard-ABS-Regelung, wie in Fig. 1a beschrieben, möglich ist.

Fig. 3c zeigt eine mögliche Ausführungsform bei diagonaler Bremskreisaufteilung, bei dem Auslassventile AV nur bei den Radbremszylindern an der Vorderachse VA eingesetzt werden. Bei dieser Anwendung können die Vorderradbremszylinder mit der Standard-ABS-Regelung betrieben werden, wie es in Fig. 1a beschrieben ist. Der Druckabbau Pab an den beiden Hinterradbremszylindern ist dabei nur möglich, wenn an keinem der Vorderradbremszylindern der Druck gleichzeitig aufgebaut wird. Da der Druckabbau zeitkritisch ist, wie detailliert in Fig. 1a beschrieben, ist der Mischbetrieb Standard-ABS-Regelung z.B. an den Vorderradbremszylindern und Pauf- und Pab-Regelung über das Ventil SV2k an den Hinterradbremszylindern mit Nachteilen bei der ABS-Regelung an den Hinterradbremszylindern verbunden.

Fig. 3c zeigt eine Anwendung bei dem Druckaufbau Pauf und Druckabbau Pab an der Hinterachse über die Ventile SV2k3 und SV2k4 durch geänderte ABS-Regelung möglich ist. Durch Stromsteuerung oder Stromregelung der Ventile SV2k3 und SV2k4 kann der Druckgradient beim Druckabbau eingestellt werden, weil die Anschlüsse der Ventile dies ermöglichen. Die Stromsteuerung oder Stromregelung ist dabei ähnlich zu der Regelung des Druckaufbaugradienten, wie sie zu Fig. 1a beschrieben ist. Der bei Fig. 1a beschriebene Kompromiss der Gradienten beim Druckabbau über das Auslassventil AV ist hier nicht erforderlich.

Beispielhaft für das Zuziehen der Ventile SV2k1, ..., SV2k4 könnte diese Situation an den Ventilen in Fig. 3c auftreten, z.B. bei den Ventilen $SV2K_1$ in BK1 und $SV2k_2$ in BK2 beim Druckabbau Pab, wenn der Druckabbau Pab über die Ansteuerung der DV erfolgt, und bei den Ventilen $SV2k_3$ in BK2 und $SV2k_4$ in BK1 beim Pauf, wenn der Pauf über die Ansteuerung der DV erfolgt. In Fig. 3b könnte das Zuziehen bei allen SV2k nur beim Druckabbau Pab über die Ansteuerung der Druckversorgung DV auftreten. In Fig. 3a könnte es bei allen Ventilen SV2k nur beim Druckaufbau Pauf über Ansteuerung der Druckversorgung DV auftreten.

Die Ausführungsform gem. Fig. 3d entspricht derer gem. Fig. 1a und Fig. 3b, mit Ergänzungen des Single Hauptbremszylinders SHZ, des Trennventils 9, des optionalen Kreistrennventils BP1, des optionalen Sicherheitsventils MVDV1 und bei zweikreisiger Pumpe das Sicherheitsventil MVDV2, und der Druckversorgung DV. Bei vielen Systemen, z.B. DE 10 2017 219 598 A1, wird das stromlos geschlossene Sicherheitsventil MVDV1/MVDV2 am Ausgang der Druckversorgung DV eingesetzt. Die Sicherheitsventile MVDV1/MVDV2 sind stromlos geschlossene Ventile und entsprechen im Aufbau dem Auslassventil AV in Fig. 3b. Dieses Sicherheitsventil MVDV1/MVDV2 wird bei Ausfall der Druckversorgung DV, z.B. bei Ausfall des Motors der Druckversorgung oder Ausfall der Kolbendichtung D1 während eines Druckaufbaus, geschlossen, um ein unkontrolliertes Rückströmen von Volumen aus den Radbremszylindern in die Druckversorgung DV und damit einen ungewollten und unkontrollierten Druckabbau in den Radbremszylindern zu verhindern. Bei Verwendung einer Druckversorgung DV mit einem Doppelhubkolben, welcher zwei Arbeitskammern abdichtend voneinander trennt, können zwei Magnetventile MVDV und MVDV2 in den hydraulischen Verbindungen, welche die beiden Ausgänge der Arbeitskammern mit den Bremskreisen BK1 und BK2 verbinden, zu deren wahlweisen Absperrung und Öffnung eingesetzt werden. Auch hier können beide Bremskreise BK1 und BK2 wahlweise über ein Ventil BP1 verbunden werden.

Auch kann anstelle einer Kolbenpumpe eine Rotationspumpe, wie z.B. eine Zahnradpumpe, eingesetzt werden, wobei anstatt eines Magnetventils MVDV1 am Ausgang der Pumpe ein einfaches Ruckschlagventil RVDV1 vorgesehen werden kann. Dieses Rückschlagventil RVDV1 erfüllt die gleiche Funktion bei Ausfall der Druckversorgung DV wie das Magnetventil MVDV1. Im Gegensatz zum Magnetventil MVDV1, bei dem über das offene Ventil ein Druckabbau über die Druckversorgung DV erfolgen kann, ist dies mit dem Rückschlagventil RVDV1 nicht möglich. Der Druckabbau Pab bei einem System mit einer Rotationspumpe erfolgt deshalb über die Auslassventile AV. Beim langsamen Druckabbau können die Auslassventile AV einzeln oder alle gemeinsam über der Druckgeber DG1 zum Druckabbau Pab gesteuert werden. Die Kombination von Rotationspumpe mit Rückschlagventil RVDV1 am Pumpenausgang stellt eine kostenminimale Lösung für eine Druckversorgung DV dar. Bei manchen Rotationspumpen ist auch die Kombination einer Druckversorgung mit Magnetventil MVDV1 möglich, mit Vorteilen bei gut regelbaren Druckabbaugeschwindigkeit über die Rotationspumpe, z.B. bei Zahnradpumpen.

Wie in Fig. 1a dargestellt, gibt es bei manchen Bremssystemen mit zwei Bremskreisen BK1 und BK2 ein stromlos offenes Kreistrennventil KTV, im Aufbau wie Trennventil BP1 in Fig. 3a, welches im Fehlerfall, z.B. bei Undichtigkeit des Bremskreises BK1, angesteuert und damit geschlossen wird, so dass der andere Bremskreis BK2 noch mit Druck durch die Druckversorgung DV beaufschlagt werden kann.

Die optionalen Schaltventile BP1 und MVDV1 können in verschiedenen Ausführungsformen eingesetzt werden:

1. Beide Ventile werden eingesetzt;

2. Nur das Sicherheitsventil MVDV1 wird eingesetzt, ohne Kreistrennventil BP1;

3. Nur das Kreistrennventil BP1 wird eingesetzt, ohne Sicherheitsventil MVDV1.

Die Ausführungsform Nr. 1 ist dabei von allen drei Ausführungsformen das teuerste Bremssystem, mit dem Vorteil der hohen Sicherheit bei Ausfall der Druckversorgung DV oder eines Bremskreises BK1 oder BK2, wie es bereits zuvor beschrieben worden ist.

Bei der Ausführungsform Nr. 2 kann der Ausfall eines Bremskreises, z.B. Undichtigkeit des Bremskreises BK1, mit Hilfe einer Diagnose festgestellt werden. So ist auch mittels Diagnose feststellbar, welcher Radkreis ausgefallen ist, z.B. Undichtigkeit des Radbremszylinders RZ1, woraufhin das zugehörige Ventil SV2k1 geschlossen werden kann. Die anderen Radbremszylinder RZ2, RZ3 und RZ4 können weiterhin über die Druckversorgung DV mit Druck beaufschlagt werden.

Bei der Ausführungsform Nr. 3, d.h. ohne Sicherheitsventil MVDV1, kann bei Ausfall der Druckversorgung DV, z.B. durch Undichtigkeit der Kolbendichtung der Druckversorgung DV, das Schaltventil 9 geöffnet und das Kreistrennventil BP1 geschlossen werden. Der Fahrer kann dann über das Bremspedal den Druck in Bremskreis BK1 kontrollieren. Es fällt dann nur Bremskreis BK2 aus. Fällt die Druckversorgung während der Bremsung aus, dann kann der Druck in den Radbremszylindern RZ1, ..., RZ4 bei geschlossenen Ventilen SV2k1, ..., SV2k4 über die Ventile AV abgebaut werden.

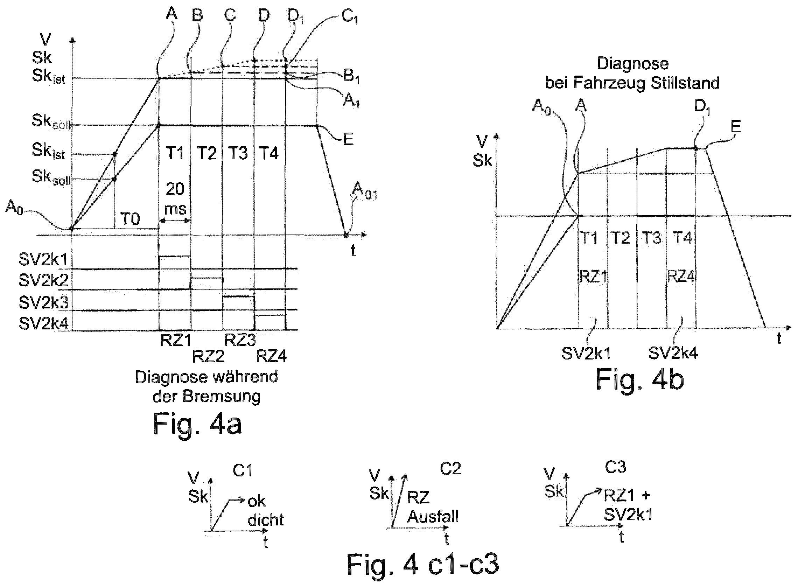

Die Figuren 4a und 4b zeigen Testzyklen zur Prüfung der Dichtheit des Bremssystems in der Diagnose. Fig. 4a zeigt Tests T0 - T4 während der Bremsung. Zu Beginn der Bremsung zum Zeitpunkt von Punkt A0 bis zum Zeitpunkt von Punkt A wird im Test T0 während des Druckaufbaues permanent der Druck und die Volumenaufnahme V der Radbremszylinder gemessen, z.B. über den Kolbenweg Sk der Druckversorgung DV. Der Sollwert des Kolbenwegs $Sk_{soll}$ wird von der abgespeicherten Druck-Volumenkennlinie der Bremse, PV-Kennlinie, in Abhängigkeit vom Druck geliefert und mit dem Istwert des Kolbenwegs $Sk_{ist}$ verglichen. Zum Zeitpunkt von Punkt A wird der Druck konstant gehalten. Wurde keine Differenz zwischen $Sk_{soll}$ und $Sk_{ist}$ zum Zeitpunkt von Punkt A gemessen, so verbleibt dieser Vergleich über die ganze Bremsphase bis zum Zeitpunkt von Punkt A1, und der Test T0 ist negativ. Wenn der Test T0 negativ ist, dann sind weitere Tests (T1, T2, T3, T4) nicht notwendig. Wird eine Differenz gemessen, so liegt eine Undichtigkeit in einem Radkreis, d.h. zwischen einem Radbremszylinder RZ und dem zugehörigen Ventil SV2k, vor, und der Test T0 ist positiv. Wenn der Test positiv ist, aber zum Zeitpunkt von Punkt A wurde nur eine sehr kleine Differenz zwischen $Sk_{soll}$ und $Sk_{ist}$ gemessen, dann sind weitere Tests (T1, T2, T3, T4) nicht notwendig. Eine Warnung im Display soll den Fahrer auffordern die Werkstatt bei erster Gelegenheit aufzusuchen. Die Differenz zwischen $Sk_{soll}$ und $Sk_{ist}$ ist sehr klein, wenn das Volumen im Vorratsbehälter für viele weitere Bremsungen, z.B. 1000, trotz Volumenverlust aus dem Bremssystem durch die Undichtigkeit im Radkreis ausreicht und der Volumenverlust durch Volumenförderung der Druckversorgung DV ausgeglichen werden kann. Wenn der Test T0 positiv ist und zum Zeitpunkt von Punkt A wurde mehr als eine sehr kleine Differenz zwischen $Sk_{soll}$ und $Sk_{ist}$ gemessen, muss bestimmt werden, in welchem Radkreis die Undichtigkeit vorliegt. Dazu erfolgt zum Zeitpunkt von Punkt A der Test T1, indem das Radbremszylinder RZ1 zugeordnete Ventil SV2k1 geschlossen wird. Ist der Radkreis 1 undicht, so ist nach der Schließung des Ventils SV2k1 keine Kolbenbewegung Sk notwendig um den gemessenen Druck konstant zu halten, und der Test T1 ist positiv. Ist der Test T1 positiv, dann bleibt das Ventil SV2k1 geschlossen bis zum Bremsende A01, von Punkt A bis Punkt A1 bleibt der Kolbenweg Sk der Druckversorgung DV konstant, und weitere Tests (T2, T3, T4) sind nicht notwendig. Die Testzeit von Test T1, die Testphase, wird mit z.B. 20 ms kurz gewählt, damit der Bremsvorgang und auch ggf. der Fahrer durch den Test nicht gestört werden. Will z.B. der Fahrer während der Testphase den Druck reduzieren, so erfolgt dies über die Kolbenbewegung der Druckversorgung DV erst nach Abschluss der Testphase oder unmittelbar, wenn bereits ein Radkreis als undicht identifiziert ist. Will der Fahrer während der Testphase den Druck erhöhen, so wird der Test abgebrochen. War der Test T1 negativ, d.h. trotz schließen des Ventils SV2k1 ist eine Zunahme des Kolbenwegs Sk der Druckversorgung DV erforderlich um den Druck konstant zu halten, so liegt keine Undichtigkeit in Radkreis 1 sondern in einem anderen Radkreis vor, und so wirkt nach Zeitpunkt von Punkt A der Leckfluss und damit der Kolbenweg Sk der Druckversorgung DV fort im Grenzfall bis zum Test T4 des Radkreises 4. Der Kolbenweg $Sk_{ist}$ der Druckversorgung DV nimmt dann während der Testphase T1 von Zeitpunkt von Punkt A zum Zeitpunkt von Punkt B zu, und es wird Punkt B erreicht. Nach dem negativen Test T1 wird das Ventil SV2k1 geöffnet. Ist der Test T1 positiv so wird kein weiterer Test mehr durchgeführt, das Ventil SV2k1 bleibt bei nachfolgenden Bremsungen geschlossen, und die Differenz zwischen $Sk_{soll}$ und $Sk_{ist}$ zum Zeitpunkt von Punkt A bleibt über die ganze Bremsphase bis zum Zeitpunkt A01 erhalten.

Eine Warnung im Display soll den Fahrer auffordern die Werkstatt sofort aufzusuchen.

Nach einem positiven Test T0 (zum Zeitpunkt von Punkt A wurde mehr als eine sehr kleine Differenz zwischen $Sk_{soll}$ und $Sk_{ist}$ gemessen) und negativen Test T1 wird zum Zeitpunkt von Punkt B der Test T2 für Radkreis 2 durchgeführt. Der Test T2 läuft ähnlich ab wie der Test T1. Dazu erfolgt zum Zeitpunkt von Punkt B der Test T2, indem das Radbremszylinder RZ2 zugeordnete Ventil SV2k2 geschlossen wird. Ist der Radkreis 2 undicht, so ist nach der Schließung des Ventils SV2k2 keine Kolbenbewegung Sk notwendig um den gemessenen Druck konstant zu halten, und der Test T2 ist positiv. Ist der Test T2 positiv, dann bleibt das Ventil SV2k2 geschlossen bis zum Bremsende A01, von Punkt B bis Punkt B1 bleibt der Kolbenweg Sk der Druckversorgung DV konstant und weitere Tests (T3, T4) sind nicht notwendig. Die Testzeit von Test T2, die Testphase, wird mit z.B. 20 ms kurz gewählt, damit der Bremsvorgang und auch ggf. der Fahrer durch den Test nicht gestört werden. Will z.B. der Fahrer während der Testphase den Druck reduzieren, so erfolgt dies über die Kolbenbewegung der Druckversorgung DV erst nach Abschluss der Testphase oder unmittelbar, wenn bereits ein Radkreis als undicht identifiziert ist. Will der Fahrer während der Testphase den Druck erhöhen, so wird der Test abgebrochen. War der Test T2 negativ, d.h. trotz schließen des Ventils SV2k2 ist eine Zunahme des Kolbenwegs Sk der Druckversorgung DV erforderlich um den Druck konstant zu halten, so liegt keine Undichtigkeit in Radkreis 2 sondern in einem anderen Radkreis vor, und so wirkt nach Zeitpunkt von Punkt B der Leckfluss und damit der Kolbenweg Sk der Druckversorgung DV fort im Grenzfall bis zum Test T4 des Radkreises 4. Der Kolbenweg Sk der Druckversorgung DV nimmt dann während der Testphase T2 von Zeitpunkt von Punkt B zum Zeitpunkt von Punkt C zu, und es wird Punkt C erreicht. Nach dem negativen Test T2 wird das Ventil SV2k2 geöffnet. Ist der Test T2 positiv so wird kein weiterer Test mehr durchgeführt, das Ventil SV2k2 bleibt bei nachfolgenden Bremsungen geschlossen, und die Differenz zwischen $Sk_{soll}$ und $Sk_{ist}$ zum Zeitpunkt von Punkt B bleibt über die ganze Bremsphase bis zum Zeitpunkt A01 erhalten. Eine Warnung im Display soll den Fahrer auffordern die Werkstatt sofort aufzusuchen.

Nach einem positiven Test T0 (zum Zeitpunkt von Punkt A wurde mehr als eine sehr kleine Differenz zwischen $Sk_{soll}$ und $Sk_{ist}$ gemessen) und negativen Tests T1 und T2 wird zum Zeitpunkt von Punkt C der Test T3 für Radkreis 3 durchgeführt. Der Test T3 läuft ähnlich ab wie der Test T1. Dazu erfolgt zum Zeitpunkt von Punkt C der Test T3, indem das Radbremszylinder RZ3 zugeordnete Ventil SV2k3 geschlossen wird. Ist der Radkreis 3 undicht, so ist nach der Schließung des Ventils SV2k3 keine Kolbenbewegung Sk notwendig um den gemessenen Druck konstant zu halten, und der Test T3 ist positiv. Ist der Test T3 positiv, dann bleibt das Ventil SV2k3 geschlossen bis zum Bremsende A01, von Punkt C bis Punkt C1 bleibt der Kolbenweg Sk der Druckversorgung DV konstant und ein weiterer Test (T4) ist nicht notwendig. Die Testzeit von Test T3, die Testphase, wird mit z.B. 20 ms kurz gewählt, damit der Bremsvorgang und auch ggf. der Fahrer durch den Test nicht gestört werden. Will z.B. der Fahrer während der Testphase den Druck reduzieren, so erfolgt dies über die Kolbenbewegung der Druckversorgung DV erst nach Abschluss der Testphase oder unmittelbar, wenn bereits ein Radkreis als undicht identifiziert ist. Will der Fahrer während der Testphase den Druck erhöhen, so wird der Test abgebrochen. War der Test T3 negativ, d.h. trotz schließen des Ventils SV2k3 ist eine Zunahme des Kolbenwegs Sk der Druckversorgung DV erforderlich um den Druck konstant zu halten, so liegt keine Undichtigkeit in Radkreis 3 sondern in einem anderen Radkreis vor, und so wirkt nach Zeitpunkt von Punkt C der Leckfluss und damit der Kolbenweg Sk der Druckversorgung DV fort im Grenzfall bis zum Test T4 des Radkreises 4. Der Kolbenweg Sk der Druckversorgung DV nimmt dann während der Testphase T3 von Zeitpunkt von Punkt C zum Zeitpunkt von Punkt D zu, und es wird Punkt D erreicht. Nach dem negativen Test T3 wird das Ventil SV2k3 geöffnet. Ist der Test T3 positiv so wird kein weiterer Test mehr durchgeführt, das Ventil SV2k3 bleibt bei nachfolgenden Bremsungen geschlossen, und die Differenz zwischen $Sk_{soll}$ und $Sk_{ist}$ zum Zeitpunkt von Punkt C bleibt über die ganze Bremsphase bis zum Zeitpunkt A01 erhalten. Eine Warnung im Display soll den Fahrer auffordern die Werkstatt sofort aufzusuchen.

Nach einem positiven Test T0 (zum Zeitpunkt von Punkt A wurde mehr als eine sehr kleine Differenz zwischen $Sk_{soll}$ und $Sk_{ist}$ gemessen) und negativen Tests T1, T2 und T3 kann auf Undichtigkeit des Radkreises 4 geschlossen werden, und das Ventil SV2k4 unmittelbar geschlossen werden. Andererseits kann auch zum Zeitpunkt von Punkt D der Test T4 für Radkreis 4 durchgeführt werden, um Undichtigkeit an anderer Stelle im Bremssystem auszuschließen. Der Test T4 läuft ähnlich ab wie der Test T1. Dazu erfolgt zum Zeitpunkt von Punkt D der Test T4, indem das Radbremszylinder RZ4 zugeordnete Ventil SV2k4 geschlossen wird. Ist der Radkreis 4 undicht, so ist nach der Schließung des Ventils SV2k4 keine Kolbenbewegung Sk notwendig um den gemessenen Druck konstant zu halten, der Test T4 ist positiv, und es wird Punkt D1 erreicht. Ist der Test T4 positiv, dann bleibt das Ventil SV2k4 geschlossen bis zum Bremsende A01, von Punkt D bis Punkt D1 bleibt der Kolbenweg Sk der Druckversorgung DV konstant ein weiterer Test ist nicht notwendig. Die Testzeit von Test T4, die Testphase, wird mit z.B. 20 ms kurz gewählt, damit der Bremsvorgang und auch ggf. der Fahrer durch den Test nicht gestört werden. Will z.B. der Fahrer während der Testphase den Druck reduzieren, so erfolgt dies über die Kolbenbewegung der Druckversorgung DV erst nach Abschluss der Testphase oder unmittelbar, wenn bereits ein Radkreis als undicht identifiziert ist. Will der Fahrer während der Testphase den Druck erhöhen, so wird der Test abgebrochen. War der Test T4 negativ, d.h. trotz schließen des Ventils SV2k4 ist eine Zunahme des Kolbenwegs Sk der Druckversorgung DV erforderlich um den Druck konstant zu halten, so liegt eine Undichtigkeit an einer anderen Stelle des Bremssystems vor, und so wirkt nach Zeitpunkt von Punkt D der Leckfluss und damit der Kolbenweg Sk der Druckversorgung DV fort. Der Kolbenweg Sk der Druckversorgung DV nimmt dann während der Testphase T4 von Zeitpunkt von Punkt D zum Bremsende A01 zu (nicht eingezeichnet). Nach dem negativen Test T4 wird das Ventil SV2k4 geöffnet. Ist der Test T4 positiv, so bleibt das Ventil SV2k4 bei nachfolgenden Bremsungen geschlossen, und die Differenz zwischen $Sk_{soll}$ und $Sk_{ist}$ zum Zeitpunkt von Punkt D bleibt über die ganze Bremsphase bis zum Zeitpunkt A01 erhalten. Mit der Durchführung von Test T4 ist der Testzyklus abgeschlossen. Sowohl beim positiven (Undichtigkeit im Radkreis 4) als auch beim negativen (Undichtigkeit liegt an anderer Stelle im Bremssystem vor) Test T4 soll eine Warnung im Display den Fahrer auffordern die Werkstatt sofort aufzusuchen.

Mit T4 ist bei Zeitpunkt von Punkt D1 der Testzyklus beendet und bei Zeitpunkt von Punkt E der Bremsvorgang mit der Druckreduzierung beendet. Diese Diagnose setzt entsprechende Genauigkeit und Dynamik der Sensoren z.B. Kolbenweg, Druck voraus.

In Fig. 4b wird der Testzyklus bei Fahrzeugstillstand gezeichnet, der nahezu voll 4a entspricht mit dem kleinen Unterschied, dass der Druck von der DV und nicht vom Fahrer bestimmt wird. Zur Vereinfachung wird hier erst im Test 4 die Undichtheit im RZ4 festgestellt. Es kann hier auch die Testzeit von z.B. 20 ms erhöht werden, z.B. Faktor 2.

Eine andere Situation entsteht, wenn zusätzlich zu einer Undichtigkeit im Radkreis, der nicht sehr klein ist, auch das zugehörige Ventil SV2k eine Undichtigkeit, z.B. durch Schmutzpartikel zwischen Ventilanker und Ventilsitz aufweist. Wenn dies bei z.B. Radkreis 1 und Ventil SV2k1 zutrifft, dann bleibt der Kolbenweg Sk während des Tests T1 nicht konstant um den Druck konstant zu halten. Volumenverluste durch Undichtigkeiten im Ventil SV2k sind klein und können von der Druckversorgung kompensiert werden, so dass der Radkreis 1 zwar ausfällt, aber die anderen Radkreisen fallen nicht aus. Eine Warnung im Display soll den Fahrer auffordern die Werkstatt unverzüglich aufzusuchen.

Die Figuren 4c1 bis 4c3 zeigen die grundsätzlichen Testverläufe.

Fig. 4c1 zeigt den Kolbenwegverlauf Sk des DV-Kolbens, wenn keine Undichtigkeit vorliegt. Die Tests T0, ..., T4 sind dann nicht erforderlich.

Fig. 4c2 zeigt den Kolbenwegverlauf Sk des DV-Kolbens wenn z.B. Radbremszylinder RZ1 undicht ist, ohne Einschaltung vom zugehörigen Ventil SV2k1 ggf. mit hohem Leckvolumenstrom, $Q_{SV2k,Leck}$ , welcher nicht vom zugehörigen geschlossenem SV2k gedrosselt wird

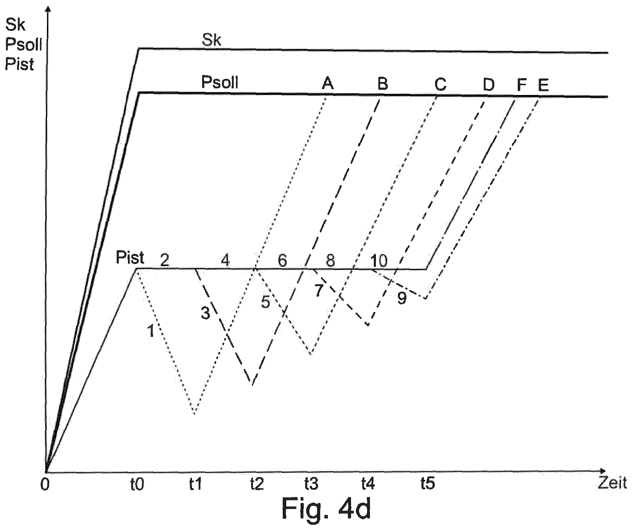

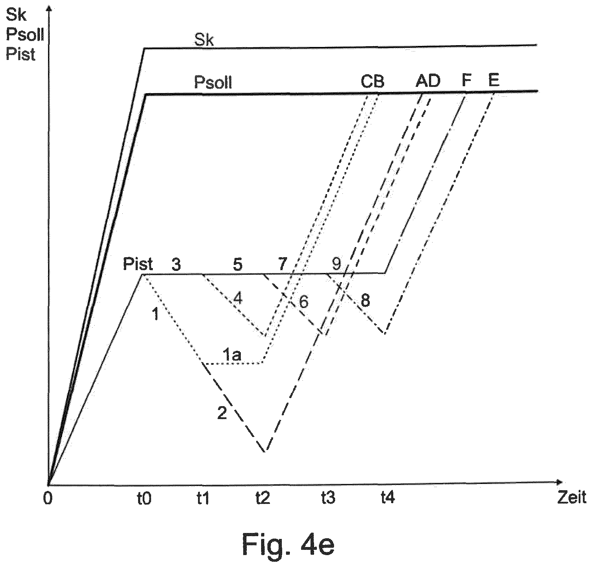

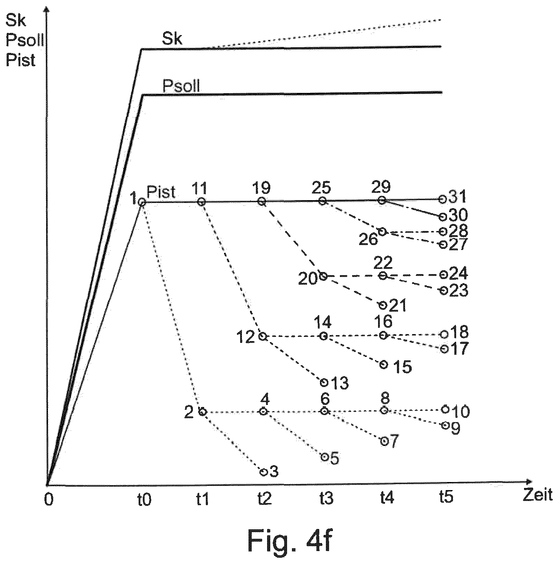

Fig. 4c3 zeigt den Kolbenwegverlauf Sk des DV-Kolbens wenn z.B. Radbremszylinder RZ1 undicht ist, wobei der Leckvolumenstrom, $Q_{SV2k1,Leck}$, klein ist, durch schließen vom undichten Ventil SV2k1. Ein ähnlicher Kolbenwegverlauf Sk wie in Fig. 4 c3 erfolgt, wenn statt des Ventils SV2k1 ein übliches Einlassventil EV1 mit parallelem Rückschlagventil RV1 verwendet wird, wobei entweder das Einlassventil EV1 oder das Rückschlagventil RV1 undicht ist oder wenn beide undicht sind. Durch Ansteuerung des z.B. undichten Einlassventils EV1 wird, bei z.B. undichtem Radbremszylinder RZ1, der Leckvolumenstrom $Q_{EV1,Leck}$ durch den undichten Radbremszylinder RZ1 nicht auf 0cm$^3$/s sondern auf einen kleinen Wert reduziert, z. B. im schlimmsten Fall (worst case) sind EV1 und RV1 beide undicht, und der Leckstrom z.B. $Q_{EV1,Leck}$ =20cm$^3$/s bei 50bar Druckdifferenz über das Ventil EV1.

Bei sehr kleiner Differenz zwischen $Sk_{soll}$ und $Sk_{ist}$ während des Tests T0 zum Zeitpunkt A0 kann eine Bremsung wie im Normalfall aufrechterhalten bleiben. Ist die Differenz jedoch nicht sehr klein, dann ist durch den Ausfall eines Radkreises, z.B. durch Undichtigkeit einer Radbremszylinderdichtung, und Schließung des zugehörigen Ventils SV2k, die Fahrzeugverzögerung geringer als im Normalfall und es entsteht während der Bremsung ein Giermoment auf das Fahrzeug. Das elektronische Stabilitätsprogramm ESP ist dabei in der Regel in der Lage (außer bei einer Vollbremsung), die Fahrzeugverzögerung an die Fahrzeugverzögerung im Normalfall anzugleichen. Damit bleibt das Bremsgefühl für den Fahrer weitgehend normal und Schreckreaktionen durch den Fahrer werden vermieden. Weiter ist das elektronische Stabilitätsprogramm ESP in der Lage das Giermoment teilweise zu kompensieren, so dass auch dadurch Schreckreaktionen durch den Fahrer reduziert werden können.

Fig. 4d zeigt beispielhaft einen ersten alternativen Diagnoseablauf zur Prüfung auf Einzelfehler mit dem Kolbenwegverlauf Sk der Druckversorgung DV, der vom Zeitpunkt 0 bis zum Zeitpunkt t0 zunimmt und ab Zeitpunkt t0 konstant bleibt, und den Soll-Druckverlauf, Psoll, welcher aus dem Kolbenwegverlauf Sk mit Hilfe der PV-Kennlinie (Druck-Volumen Kennlinie) der Bremsanlage abgeleitet wird. Weiter zeigt Fig. 4d den Ist-Druckverlauf, Pist, welcher mit dem Drucksensor DG gemessen wird (siehe Fig. 3a). Zum Zeitpunkt t0 wird eine Differenz zwischen dem Solldruck, Psoll, und dem Ist-Druck, Pist, entdeckt, die auf ein Fehlverhalten der Bremsanlage schließen lässt. Aus dem Grund werden zum Zeitpunkt t0 alle Ventile SV2k1 , ..., SV2k4 geschlossen, und der Ist-Druckverlauf Pist, im Testzeitraum von Zeitpunkt t0 bis Zeitpunkt t1, beobachtet. Fällt der Ist-Druck Pist von Zeitpunkt t0 bis zum Zeitpunkt t1 ab, welches durch die gestrichelte Linie 1 angedeutet ist, dann wird das Fehlverhalten der Bremsanlage nicht durch eine Undichtigkeit eines Radkreises, RK1, ..., RK4, verursacht, sondern z.B. durch eine Undichtigkeit der Kolbendichtung der Druckversorgung DV. Die Ventile SV2k1, SV2k2, SV2k3 und SV2k4 können wieder geöffnet werden und über eine Kolbenbewegung der Druckversorgung DV kann der Ist-Druck Pist auf den Soll-Druck Psoll angehoben werden, der in Punkt A erreicht wird. Durch die Undichtigkeit der Kolbendichtung der Druckversorgung DV ist auch nach Punkt A eine ständige Kolbenbewegung erforderlich, um den Ist-Druck Pist auf Soll-Druckniveau Psoll zu halten. Dies hat den Vorteil, dass trotz Fehler die normale Bremswirkung in allen Radbremszylindern aufrechterhalten bleibt. Wenn jedoch bei dem Soll-Druckniveau Psoll die Leckrate der Kolbendichtung die maximale Förderrate der Druckversorgung DV übersteigt, dann wird auf eine Rückfallebene ohne Druckversorgung DV geschaltet.

Fällt der Ist-Druck Pist im Testzeitraum t0 bis t1 nicht ab, was durch die durchgezogene Linie 2 beim Ist-Druck Pist von Zeitpunkt t0 bis t1 angedeutet ist, so wird zum Zeitpunkt t1 Ventil SV2k1 geöffnet, und der Ist-Druckverlauf Pist, im Testzeitraum von Zeitpunkt t1 bis Zeitpunkt t2, beobachtet. Fällt der Ist-Druck Pist von Zeitpunkt t1 zum Zeitpunkt t2 ab, welches durch die gestrichelte Linie 3 angedeutet ist, dann wird das Fehlverhalten der Bremsanlage durch eine Undichtigkeit des Radkreises 1 verursacht. Ventil SV2k1 wird dann zum Zeitpunkt t2 geschlossen, während die Ventile SV2k2, SV2k3 und SV2k4 wieder geöffnet werden, und über eine Kolbenbewegung der Druckversorgung DV kann der Ist-Druck Pist auf den Soll-Druck Psoll angehoben werden, der in Punkt B erreicht wird.

Fällt der Ist-Druck Pist im Testzeitraum t1 bis t2 nicht ab, was durch die durchgezogene Linie 4 beim Ist-Druck Pist von Zeitpunkt t1 bis Zeitpunkt t2 angedeutet ist, so wird zum Zeitpunkt t2 Ventil SV2k2 geöffnet, und der Ist-Druckverlauf Pist, im Testzeitraum von Zeitpunkt t2 bis Zeitpunkt t3, beobachtet. Fällt der Ist-Druck Pist von Zeitpunkt t2 zum Zeitpunkt t3 ab, welches durch die gestrichelte Linie 5 angedeutet ist, dann wird das Fehlverhalten der Bremsanlage durch eine Undichtigkeit des Radkreises 2 verursacht. Ventil SV2k2 wird dann zum Zeitpunkt t3 geschlossen, während die Ventile SV2k1, SV2k3 und SV2k4 wieder geöffnet werden, und über eine Kolbenbewegung der Druckversorgung DV kann der Ist-Druck Pist auf den Soll-Druck Psoll angehoben werden, der in Punkt C erreicht wird.

Fällt der Ist-Druck Pist im Testzeitraum von Zeitpunkt t2 bis Zeitpunkt t3 nicht ab, was durch die durchgezogene Linie 6 beim Ist-Druck Pist von Zeitpunkt t2 bis t3 angedeutet ist, so wird zum Zeitpunkt t3 Ventil SV2k3 geöffnet, und der Ist-Druckverlauf Pist, im Testzeitraum von Zeitpunkt t3 bis Zeitpunkt t4, beobachtet. Fällt der Ist-Druck Pist von Zeitpunkt t3 zum Zeitpunkt t4 ab, welches durch die strichpunktierte Linie 7 angedeutet ist, dann wird das Fehlverhalten der Bremsanlage durch eine Undichtigkeit des Radkreises 3 verursacht. Ventil SV2k3 wird dann zum Zeitpunkt t4 geschlossen, während die Ventile SV2k1, SV2k2 und SV2k4 wieder geöffnet werden, und über eine Kolbenbewegung der Druckversorgung DV kann der Ist-Druck Pist auf den Soll-Druck Psoll angehoben werden, der in Punkt D erreicht wird.

Fällt der Ist-Druck Pist im Testzeitraum von Zeitpunkt t3 bis Zeitpunkt t4 nicht ab, was durch die durchgezogene Linie 8 beim Ist-Druck Pist von Zeitpunkt t3 bis t4 angedeutet ist, so wird zum Zeitpunkt t4 Ventil SV2k4 geöffnet, und der Ist-Druckverlauf Pist, im Testzeitraum von Zeitpunkt t4 bis Zeitpunkt t5, beobachtet. Fällt der Ist-Druck Pist von Zeitpunkt t4 zum Zeitpunkt t5 ab, welches durch die strichpunktierte Linie 9 angedeutet ist, dann wird das Fehlverhalten der Bremsanlage durch eine Undichtigkeit des Radkreises 4 verursacht. Ventil SV2k4 wird dann zum Zeitpunkt t5 geschlossen, während die Ventile SV2k1, SV2k2 und SV2k3 wieder geöffnet werden, und über eine Kolbenbewegung der Druckversorgung DV kann der Ist-Druck Pist auf den Soll-Druck Psoll angehoben werden, der in Punkt E erreicht wird.

Fällt der Ist-Druck Pist im Testzeitraum von Zeitpunkt t4 bis Zeitpunkt t5 nicht ab, was durch die durchgezogene Linie 10 beim Ist-Druck Pist von Zeitpunkt t4 bis Zeitpunkt t5 angedeutet ist, so wird das Fehlverhalten der Bremsanlage nicht durch eine Undichtigkeit eines Radkreises, RK1, ..., RK4, verursacht, sondern z.B. durch Luftblasen in der Bremsflüssigkeit. Zum Zeitpunkt t5 können die Ventile SV2k1, SV2k2, SV2k3 und SV2k4 wieder geöffnet werden, und über eine Kolbenbewegung der Druckversorgung DV kann der Ist-Druck Pist auf den Soll-Druck Psoll angehoben werden, der in Punkt F erreicht wird.

Die Reihenfolge, in der die Ventile geöffnet werden, und die Größe der Undichtigkeiten in den Radkreisen, RK1, ..., RK4, und Kolbendichtung der Druckversorgung DV ist hier beispielhaft gewählt, und ist nicht bindend. Die Reihenfolge kann z.B. nach fahrdynamischen Gesichtspunkten gewählt werden. Wie bei Undichtigkeit der Kolbendichtung der Druckversorgung DV kann bei Undichtigkeit eines Radkreises, z.B. Radkreis 1, das zugehörige Ventil SV2k1 geöffnet bleiben um mit einer ständigen Kolbenbewegung den Ist-Druck Pist auf Soll-Druckniveau Psoll zu halten. Wie bereits erwähnt hat dies den Vorteil, dass trotz Fehler die normale Bremswirkung in allen Radbremszylindern aufrechterhalten bleibt. Auch in diesem Fall gilt, dass wenn bei dem Soll-Druckniveau Psoll die Leckrate des Radkreises 1 die maximale Förderrate der Druckversorgung DV übersteigt, der Solldruck Psoll nicht erreicht wird, und der Ist-Druck Pist würde niedriger bleiben als der Soll-Druck Psoll. In dem Fall wird das Ventil SV2k1 geschlossen. Wenn beim geöffneten Ventil SV2k1 Bremsflüssigkeit aus dem Bremssystem abfließt, dann macht sich dies bemerkbar durch eine Reduzierung des Niveaus im Vorratsbehälter VB, so dass die Kompensation des Leckflusses zeitlich begrenzt werden kann, und das Ventil SV2k1 rechtzeitig geschlossen werden kann, damit für nachfolgenden Bremsungen ausreichend Bremsflüssigkeit im Vorratsbehälter VB bleibt. Wenn Bremsflüssigkeit aus dem Bremssystem abfließt soll einerseits noch das Risiko berücksichtigt werden, dass die Umwelt mit Bremsflüssigkeit verschmutzt werden kann, und andererseits, dass Feuer entstehen kann, wenn die leicht brennbare Bremsflüssigkeit auf heiße Teile, wie z.B. die Bremsscheibe, trifft. Dieses Risiko kann reduziert werden, in dem das Ventil SV2k1 nicht geöffnet wird.

Fig. 4e zeigt beispielhaft einen zweiten alternativen Diagnoseablauf zur Prüfung auf Einzelfehler mit dem Kolbenwegverlauf Sk der Druckversorgung DV, der vom Zeitpunkt 0 bis zum Zeitpunkt t0 zunimmt und ab Zeitpunkt t0 konstant bleibt, und den Soll-Druckverlauf, Psoll, welche aus dem Kolbenwegverlauf Sk mit Hilfe der PV-Kennlinie (Druck-Volumen Kennlinie) der Bremsanlage abgeleitet wird. Weiter zeigt Fig. 4e den Druckverlauf, Pist, welche mit dem Drucksensor DG gemessen wird (siehe Fig. 3a). Zum Zeitpunkt t0 wird eine Differenz zwischen dem Solldruck, Psoll, und dem Ist-Druck, Pist, entdeckt, die auf ein Fehlverhalten der Bremsanlage schließen lässt. Aus dem Grund wird zum Zeitpunkt t0 das Ventil BP1 (siehe Fig. 3a) geschlossen, und der Ist-Druckverlauf Pist in Bremskreis BK2 (siehe Fig. 3a), im Testzeitraum von Zeitpunkt t1 bis Zeitpunkt t2, beobachtet. Die Ventile SV2k3 und SV2k4 bleiben offen. Die Ventile SV2k1 und SV2k2 werden geschlossen, damit bei einer eventuellen Undichtigkeit der Radkreise in Bremskreis 1, RK1 oder RK2, im Testzeitraum von Zeitpunkt t1 bis Zeitpunkt t2, Bremsflüssigkeit nicht aus beiden Radkreisen, RK1, RK2, abfließt.

Für den weiteren Verlauf der Diagnose wird nun unterschieden, ob der Druck Pist im Zeitabschnitt von Zeitpunkt t0 bis Zeitpunkt t1 abfällt oder nicht.

1. Fällt der Ist-Druck in Bremskreis 2, gemessen mit dem Drucksensor DG, von Zeitpunkt t0 bis zum Zeitpunkt t1 ab, welches durch die fein gestrichelte Linie 1 angedeutet ist, dann wird das Fehlverhalten der Bremsanlage durch eine Undichtigkeit eines Radkreises in Bremskreis BK2, RK3 oder RK4, verursacht. Deshalb wird zum Zeitpunkt t1 das Ventil SV2k3 geschlossen, und der Ist-Druckverlauf Pist in Bremskreis BK2, im Testzeitraum von Zeitpunkt t1 bis Zeitpunkt t2, beobachtet.

Fällt der Ist-Druck Pist von Zeitpunkt t1 zum Zeitpunkt t2 ab, welches durch die grob gestrichelte Linie 2 angedeutet ist, dann wird das Fehlverhalten der Bremsanlage durch eine Undichtigkeit des Radkreises 4 verursacht. Dann wird zum Zeitpunkt t2 das Ventil SV2k4 geschlossen und das Ventil BP1 und die Ventile SV2k1, SV2k2 und SVk3 werden geöffnet. Über eine Kolbenbewegung der Druckversorgung DV kann der Ist-Druck Pist in den Radbremszylindern RZ1, RZ2 und RZ3 ab dem Zeitpunkt t2 auf den Soll-Druck Psoll angehoben werden, der in Punkt A erreicht wird.

Fällt der Ist-Druck Pist von Zeitpunkt t1 zum Zeitpunkt t2 nicht ab, was durch die fein gestrichelte Linie 1a beim Ist-Druck von Zeitpunkt t1 bis t2 angedeutet ist, so ist der Radkreis 3 undicht und es werden zum Zeitpunkt t2 das Ventil BP1 und die Ventile SV2k1 und SV2k2 geöffnet. Über eine Kolbenbewegung der Druckversorgung DV kann der Ist-Druck Pist in den Radbremszylindern RZ1, RZ2 und RZ4 ab dem Zeitpunkt t2 auf den Soll-Druck angehoben werden, der in Punkt B erreicht wird.

2. Fällt der Ist-Druck Pist in Bremskreis 2, gemessen mit dem Drucksensor DG (siehe Fig. 3a), von Zeitpunkt t0 bis zum Zeitpunkt t1 nicht ab, welches durch die durchgezogene Linie 3 angedeutet ist, dann wird das Fehlverhalten der Bremsanlage nicht durch eine Undichtigkeit eines Radkreises in Bremskreis BK2, RK3 oder RK4, verursacht. Deshalb wird zum Zeitpunkt t1 das Ventil BP1 geöffnet, und der Ist-Druckverlauf Pist in Bremskreis BK2, im Testzeitraum t1 bis t2, beobachtet. Fällt der Ist-Druck Pist von Zeitpunkt t1 zum Zeitpunkt t2 ab, welches durch die etwas weniger fein gestrichelte Linie 4 angedeutet ist, dann wird das Fehlverhalten der Bremsanlage nicht durch eine Undichtigkeit des Radkreises 1 oder des Radkreises 2 verursacht, weil die Ventile SV2k1 und SV2k2 noch geschlossen sind, sondern z.B. durch eine Undichtigkeit in der Druckversorgung DV. In dem Fall werden zum Zeitpunkt t2 die Ventile SV2k1 und SV2k2 geöffnet, wobei die Ventile SV2k3 und SV2k4 noch geöffnet sind und über eine Kolbenbewegung der Druckversorgung DV kann ab dem Zeitpunkt t2 der Ist-Druck Pist in allen Radbremszylindern RZ1, RZ2, RZ3 und RZ4 auf den Soll-Druck Psoll angehoben werden, der in Punkt C erreicht wird. Durch die Undichtigkeit der Kolbendichtung der Druckversorgung DV ist auch nach Punkt C eine ständige Kolbenbewegung erforderlich, um den Ist-Druck Pist auf Soll-Druckniveau Psoll zu halten. Wie bereits erwähnt hat dies den Vorteil, dass trotz Fehler die normale Bremswirkung in allen Radbremszylindern aufrechterhalten bleibt. Wenn jedoch bei dem Soll-Druckniveau Psoll die Leckrate der Kolbendichtung die maximale Förderrate der Druckversorgung DV übersteigt, dann wird auf eine Rückfallebene ohne Druckversorgung DV geschaltet.

Fällt der Ist-Druck Pist von Zeitpunkt t1 zum Zeitpunkt t2 nicht ab, was durch die durchgezogene Linie 5 beim Ist-Druck Pist von Zeitpunkt t1 bis Zeitpunkt t2 angedeutet ist, so ist Radkreis 1 oder Radkreis 2 undicht. Deshalb wird zum Zeitpunkt t2 das Ventil SV2k1 geöffnet, und der Ist-Druckverlauf Pist im Testzeitraum von Zeitpunkt t2 bis Zeitpunkt t3, beobachtet.

Fällt der Ist-Druck Pist von Zeitpunkt t2 zum Zeitpunkt t3 ab, welches durch die noch etwas weniger fein gestrichelte Linie 6 angedeutet ist, dann wird das Fehlverhalten der Bremsanlage durch eine Undichtigkeit des Radkreises 1 verursacht. Zum Zeitpunkt t3 wird dann das Ventil SV2k1 geschlossen und das Ventil SV2k2 geöffnet, wobei die Ventile SV2k3 und SV2k4 noch geöffnet sind und über eine Kolbenbewegung der Druckversorgung DV kann ab dem Zeitpunkt t3 der Ist-Druck Pist in den Radbremszylindern RZ2, RZ3 und RZ4 auf den Soll-Druck Psoll angehoben werden, der in Punkt D erreicht wird.

Fällt der Ist-Druck Pist von Zeitpunkt t2 zum Zeitpunkt t3 nicht ab, welches durch die durchgezogene Linie 7 angedeutet ist, dann wird das Fehlverhalten der Bremsanlage nicht durch eine Undichtigkeit des Radkreises 1 verursacht. Deshalb wird zum Zeitpunkt t3 das Ventil SV2k2 geöffnet, und der Ist-Druckverlauf Pist im Testzeitraum von Zeitpunkt t3 bis Zeitpunkt t4, beobachtet.

Fällt der Ist-Druck Pist von Zeitpunkt t3 zum Zeitpunkt t4 ab, welches durch die strichpunktierte Linie 8 angedeutet ist, dann wird das Fehlverhalten der Bremsanlage durch eine Undichtigkeit des Radkreises 2 verursacht. Zum Zeitpunkt t4 wird dann das Ventil SV2k2 geschlossen wobei die Ventile SV2k1, SV2k3 und SV2k4 noch geöffnet sind, und über eine Kolbenbewegung der Druckversorgung DV kann ab dem Zeitpunkt t4 der Ist-Druck Pist in den Radbremszylindern RZ1, RZ3 und RZ4 auf den Soll-Druck Psoll angehoben werden, der in Punkt E erreicht wird.

Fällt der Ist-Druck Pist von Zeitpunkt t3 zum Zeitpunkt t4 nicht ab, was durch die durchgezogene Linie 9 beim Ist-Druck Pist von Zeitpunkt t3 bis t4 angedeutet ist, so wird das Fehlverhalten der Bremsanlage nicht durch eine Undichtigkeit eines Radkreises, RK1, ..., RK4, verursacht, sondern z.B. durch Luftblasen in der Bremsflüssigkeit. Zum Zeitpunkt t4 kann, bei offenen Ventilen SV2k1, SV2k2, SV2k3, SV2k4 über eine Kolbenbewegung der Druckversorgung DV der Ist-Druck Pist auf den Soll-Druck Psoll angehoben werden, der in Punkt F erreicht wird.

Die Reihenfolge, in der die Ventile geöffnet und geschlossen werden und die Größe der Undichtigkeiten in den Radbremskreisen und Kolbendichtung der Druckversorgung DV sind hier beispielhaft gewählt, und sind nicht bindend. Die Reihenfolge kann z.B. nach fahrdynamischen Gesichtspunkten gewählt werden. Wie bei Undichtigkeit der Kolbendichtung der Druckversorgung DV kann bei Undichtigkeit eines Radbremskreises, z.B. Radbremskreis 1, das zugehörige Ventil SV2k1 geöffnet bleiben um mit einer ständigen Kolbenbewegung den Ist-Druck Pist auf Soll-Druckniveau Psoll zu halten. Wie bereits erwähnt hat dies den Vorteil, dass trotz Fehler die normale Bremswirkung in allen Radbremszylindern aufrechterhalten bleibt. Auch in diesem Fall gilt, dass wenn bei dem Soll-Druckniveau Psoll die Leckrate des Radkreises 1 die maximale Förderrate der Druckversorgung DV übersteigt, der Solldruck Psoll nicht erreicht wird, und der Ist-Druck Pist würde niedriger bleiben als der Soll-Druck Psoll. In dem Fall wird das Ventil SV2k1 geschlossen. Wenn beim geöffneten Ventil SV2k1 Bremsflüssigkeit aus dem Bremssystem abfließt, dann macht sich dies bemerkbar durch eine Reduzierung des Niveaus im Vorratsbehälter VB, so dass die Kompensation des Leckflusses zeitlich begrenzt werden kann, und das Ventil SV2k1 rechtzeitig geschlossen werden kann, damit für nachfolgenden Bremsungen ausreichend Bremsflüssigkeit im Vorratsbehälter VB bleibt. Wenn Bremsflüssigkeit aus dem Bremssystem abfließt soll einerseits noch das Risiko berücksichtigt werden, dass die Umwelt mit Bremsflüssigkeit verschmutzt werden kann, und andererseits, dass Feuer entstehen kann, wenn die leicht brennbare Bremsflüssigkeit auf heiße Teile, wie z.B. die Bremsscheibe, trifft. Dieses Risiko kann reduziert werden, in dem das Ventil SV2k1 nicht geöffnet wird.

Fig. 4f zeigt beispielhaft den ersten alternativen Diagnoseablauf, jedoch nun zur Prüfung auf Doppelfehler in Form eines Logik-Baumes, mit dem Kolbenwegverlauf Sk der Druckversorgung DV, der vom Zeitpunkt 0 bis zum Zeitpunkt t0 zunimmt und ab Zeitpunkt t0 konstant bleibt, und den Soll-Druckverlauf, Psoll, welcher aus dem Kolbenwegverlauf Sk mit Hilfe der PV-Kennlinie (Druck-Volumen Kennlinie) der Bremsanlage abgeleitet wird. Weiter zeigt Fig. 4f den Ist-Druckverlauf, Pist, welcher mit dem Drucksensor DG gemessen wird (siehe Fig. 3a). Zum Zeitpunkt t0 wird bei Punkt 1 eine Differenz zwischen dem Solldruck, Psoll, und dem Ist-Druck, Pist, entdeckt, die auf ein Fehlverhalten der Bremsanlage schließen lässt. Aus dem Grund werden zum Zeitpunkt t0 alle Ventile, SV2k1, ..., SV2k4 geschlossen, und der Ist-Druckverlauf Pist, im Testzeitraum von Zeitpunkt t0 bis Zeitpunkt t1, beobachtet. Fällt der Ist-Druck Pist von Zeitpunkt t0 bis zum Zeitpunkt t1 bis Punkt 2 ab, dann wird das Fehlverhalten der Bremsanlage mindestens durch eine andere Undichtigkeit als eventuelle Undichtigkeiten an den Radkreisen, RK1, ..., RK4, z.B. durch eine Undichtigkeit der Kolbendichtung der Druckversorgung DV, verursacht. Zur zusätzlichen Prüfung der Dichtigkeit der Radkreise, RK1, ..., RK4, wird in Punkt 2 die Förderrate der Druckversorgung DV so eingestellt, dass der Leckfluss durch die Undichtigkeit der Kolbendichtung der Druckversorgung DV kompensiert wird. Dies wird durch die fein gestrichelte Linie beim Kolbenweg Sk ab Zeitpunkt t1 dargestellt. Ist der Leckfluss aber größer als die maximale Förderrate der Druckversorgung DV, so wird die Diagnose abgebrochen, und auf eine Rückfallebene ohne Druckversorgung geschaltet. Sonst wird gleichzeitig in Punkt 2 das Ventil SV2k1 geöffnet. Fällt der gemessene Druck ab, so wird zum Zeitpunkt t2 Punkt 3 erreicht, was auf den Doppelfehler «Druckversorgung DV undicht und Radkreis 1 undicht» hinweist. Fällt der gemessene Druck nicht ab, so wird zum Zeitpunkt t2 Punkt 4 erreicht. In Punkt 4 wird Ventil SV2k1 geschlossen und Ventil SV2k2 geöffnet. Fällt der gemessene Druck ab, so wird zum Zeitpunkt t3 Punkt 5 erreicht, was auf den Doppelfehler «Druckversorgung DV undicht und Radkreis 2 undicht» hinweist. Fällt der gemessene Druck nicht ab, so wird zum Zeitpunkt t3 Punkt 6 erreicht. In Punkt 6 wird Ventil SV2k2 geschlossen und Ventil SV2k3 geöffnet. Fällt der gemessene Druck ab, so wird zum Zeitpunkt t4 Punkt 7 erreicht, was auf den Doppelfehler «Druckversorgung DV undicht und Radkreis 3 undicht» hinweist. Fällt der gemessene Druck nicht ab, so wird zum Zeitpunkt t4 Punkt 8 erreicht. In Punkt 8 wird Ventil SV2k4 geöffnet. Fällt der gemessene Druck ab, so wird zum Zeitpunkt t5 Punkt 9 erreicht, was auf den Doppelfehler «Druckversorgung DV undicht und Radkreis 4 undicht» hinweist. Fällt der gemessene Druck nicht ab, so wird zum Zeitpunkt t5 Punkt 10 erreicht, bei dem nur die Druckversorgung DV undicht ist und es liegt kein Doppelfehler vor, weil kein Radkreis, RK1, ..., RK4, undicht ist. Durch die Undichtigkeit der Kolbendichtung der Druckversorgung DV ist nach Punkt 10 eine ständige Kolbenbewegung erforderlich, um den Ist-Druck Pist auf Soll-Druckniveau Psoll zu halten. Auch bei einer zusätzlichen Undichtigkeit eines Radkreises in Punkt 3 oder 5 oder 7 oder 9, z.B. Radkreis 1 in Punkt 3, kann das zugehörige Ventil SV2k1 geöffnet bleiben um mit einer ständigen Kolbenbewegung der Druckversorgung DV den Ist-Druck Pist auf Soll-Druckniveau Psoll zu halten. Wie bereits erwähnt hat dies den Vorteil, dass trotz Fehler die normale Bremswirkung in allen Radbremszylindern aufrechterhalten bleibt. Auch in diesem Fall gilt, dass wenn bei dem Soll-Druckniveau die Summe der Leckraten der Kolbendichtung und des Radkreises 1 die maximale Förderrate der Druckversorgung DV übersteigt, dann wird der Solldruck Psoll nicht erreicht, und der Ist-Druck Pist bleibt niedriger als der Soll-Druck Psoll. In diesem Fall wird das Ventil SV2k1 geschlossen. Wenn beim offenen Ventil SV2k1 Bremsflüssigkeit aus dem Bremssystem abfließt, dann macht sich dies bemerkbar durch eine Reduzierung des Niveaus im Vorratsbehälter, so dass die Kompensation des Leckflusses in Radbremszylinder RZ1 zeitlich begrenzt werden kann, und das Ventil SV2k1 rechtzeitig geschlossen werden kann, damit ausreichend Bremsflüssigkeit für nachfolgenden Bremsungen im Vorratsbehälter VB bleibt. Wenn Bremsflüssigkeit aus dem Bremssystem abfließt soll einerseits noch berücksichtigt werden, dass die Umwelt mit Bremsflüssigkeit verschmutzt werden kann, und andererseits, dass Feuer entstehen kann, wenn die leicht brennbare Bremsflüssigkeit auf heiße Teile, wie z.B. die heiße Bremsscheibe, trifft. Dieses Risiko kann reduziert werden, in dem das Ventil SV2k1 nicht geöffnet wird.

Fällt der Ist-Druck Pist von Zeitpunkt t0, ab Punkt 1, bis zum Zeitpunkt t1 nicht ab, dann wird zum Zeitpunkt t1 Punkt 11 erreicht und es wird geprüft ob das Fehlverhalten durch eine Undichtigkeit eines oder zwei Radkreise, RK1, RK2, RK3 oder RK4, verursacht wird. Zur Prüfung der Dichtigkeit des Radkreises 1 wird in Punkt 11 das Ventil SV2k1 geöffnet. Fällt danach der gemessene Druck ab, dann gibt es eine Undichtigkeit beim Radkreis 1 und es wird zum Zeitpunkt t2, Punkt 12, erreicht. Ab Zeitpunkt t2, Punkt 12, wird dann auf einen Zweitfehler geprüft, wobei zum Zeitpunkt t2 Ventil SV2k1 geschlossen und Ventil SV2k2 geöffnet wird. Fällt danach der gemessene Druck ab, so wird zum Zeitpunkt t3 Punkt 13 erreicht, was auf den Doppelfehler «Radkreis 1 undicht und Radkreis 2 undicht» hinweist. Fällt danach der gemessene Druck nicht ab, so wird zum Zeitpunkt t3 Punkt 14 erreicht. Dies deutet darauf hin, dass bei Radkreis 2 keine Undichtigkeit vorliegt. Zum Zeitpunkt t3, in Punkt 14, wird dann das Ventil SV2k2 geschlossen und das Ventil SV2k3 geöffnet. Fällt dadurch der gemessene Druck ab, so wird zum Zeitpunkt t4 Punkt 15 erreicht, was auf den Doppelfehler «Radkreis 1 undicht und Radkreis 3 undicht» hinweist. Fällt dadurch der gemessene Druck nicht ab, so wird zum Zeitpunkt t4 Punkt 16 erreicht. Dies deutet darauf hin, dass bei Radkreis 3 keine Undichtigkeit vorliegt. In Punkt 16 wird Ventil SV2k3 geschlossen und Ventil SV2k4 geöffnet. Fällt dadurch der gemessene Druck ab, so wird zum Zeitpunkt t5 Punkt 17 erreicht, was auf den Doppelfehler «Radkreis 1 undicht und Radkreis 4 undicht» hinweist. Fällt dadurch der gemessene Druck nicht ab, so wird zum Zeitpunkt t5 Punkt 18 erreicht, bei dem nur Radkreis 1 undicht ist und es liegt kein Doppelfehler vor.

Fällt der Ist-Druck Pist von Zeitpunkt t1, ab Punkt 11, bis zum Zeitpunkt t2 nicht ab, dann wird zum Zeitpunkt t2 Punkt 19 erreicht und das Fehlverhalten der Bremsanlage wird nicht durch eine Undichtigkeit des Radkreises 1 verursacht, und es wird geprüft ob das Fehlverhalten durch eine Undichtigkeit eines oder zwei Radkreise, RK2, RK3 oder RK4, verursacht wird. Zur Prüfung der Dichtigkeit des Radkreises 2 wird in Punkt 19 das Ventil SV2k1 geschlossen und das Ventil SV2k2 geöffnet. Fällt danach der gemessene Druck ab, dann gibt es eine Undichtigkeit beim Radkreis 2 und es wird zum Zeitpunkt t3, Punkt 20, erreicht. Ab Zeitpunkt t3, Punkt 20, wird dann auf einen Zweitfehler geprüft, wobei zum Zeitpunkt t3 Ventil SV2k2 geschlossen und Ventil SV2k3 geöffnet wird. Fällt danach der gemessene Druck ab, so wird zum Zeitpunkt t4 Punkt 21 erreicht, was auf den Doppelfehler «Radkreis 2 undicht und Radkreis 3 undicht» hinweist. Fällt danach der gemessene Druck nicht ab, so wird zum Zeitpunkt t4 Punkt 22 erreicht. Dies deutet darauf hin, dass bei Radkreis 3 keine Undichtigkeit vorliegt. Zum Zeitpunkt t4, in Punkt 22, wird dann das Ventil SV2k3 geschlossen und das Ventil SV2k4 geöffnet. Fällt dadurch der gemessene Druck ab, so wird zum Zeitpunkt t5 Punkt 23 erreicht, was auf den Doppelfehler «Radkreis 2 undicht und Radkreis 4 undicht» hinweist. Fällt dadurch der gemessene Druck nicht ab, so wird zum Zeitpunkt t5 Punkt 24 erreicht. Dies deutet darauf hin, dass bei Radkreis 4 keine Undichtigkeit vorliegt und dass nur Radkreis 2 undicht ist und es liegt kein Doppelfehler vor.

Fällt der Ist-Druck Pist von Zeitpunkt t2, ab Punkt 19, bis zum Zeitpunkt t3 nicht ab, dann wird zum Zeitpunkt t3 Punkt 25 erreicht und das Fehlverhalten der Bremsanlage wird nicht durch eine Undichtigkeit der Radkreise, RK1 oder RK2 verursacht, und es wird geprüft ob das Fehlverhalten durch eine Undichtigkeit eines oder zwei Radkreise, RK3 oder RK4, verursacht wird. Zur Prüfung der Dichtigkeit des Radkreises 3 wird in Punkt 25 das Ventil SV2k2 geschlossen und das Ventil SV2k3 geöffnet. Fällt danach der gemessene Druck ab, dann gibt es eine Undichtigkeit beim Radkreis 3 und es wird zum Zeitpunkt t4 Punkt 26 erreicht. Ab Zeitpunkt t4, Punkt 26, wird dann auf einen Zweitfehler geprüft, wobei zum Zeitpunkt t4 Ventil SV2k3 geschlossen und Ventil SV2k4 geöffnet wird. Fällt danach der gemessene Druck ab, so wird zum Zeitpunkt t4 Punkt 27 erreicht, was auf den Doppelfehler «Radkreis 3 undicht und Radkreis 4 undicht» hinweist. Fällt danach der gemessene Druck nicht ab, so wird zum Zeitpunkt t5 Punkt 28 erreicht. Dies deutet darauf hin, dass bei Radkreis 4 keine Undichtigkeit vorliegt, und dass nur Radkreis 3 undicht ist und es liegt kein Doppelfehler vor.

Fällt der Ist-Druck Pist von Zeitpunkt t3, ab Punkt 25, bis zum Zeitpunkt t4 nicht ab, dann wird zum Zeitpunkt t4 Punkt 29 erreicht und das Fehlverhalten der Bremsanlage wird nicht durch eine Undichtigkeit der Radkreise, RK1, RK2 oder RK3, verursacht, und es wird geprüft ob das Fehlverhalten durch eine Undichtigkeit des Radkreises 4 verursacht wird. Zur Prüfung der Dichtigkeit des Radkreises 4 wird in Punkt 29 das Ventil SV2k3 geschlossen und das Ventil SV2k4 geöffnet. Fällt danach der gemessene Druck ab, dann gibt es eine Undichtigkeit beim Radkreis 4 und es wird zum Zeitpunkt t5 Punkt 30 erreicht. Es gibt aber keinen Doppelfehler. Fällt danach der gemessene Druck nicht ab, so wird zum Zeitpunkt t5 Punkt 31 erreicht. Dies deutet darauf hin, dass bei Radkreis 4 keine Undichtigkeit vorliegt. Wenn Punkt 31 erreicht wird, gibt es keine Undichtigkeiten in den Radkreisen RK1, ..., RK4 und das Fehlverhalten der Bremsanlage muss eine andere Ursache haben, z.B. Luftblasen in der Bremsflüssigkeit.

Die Reihenfolge, in der die Ventile geöffnet werden, und die Größe der Undichtigkeiten bei den Radkreisen, RK1, ..., RK4, und Kolbendichtung der Druckversorgung DV ist hier beispielhaft gewählt, und sind nicht bindend. Die Reihenfolge kann z.B. nach fahrdynamischen Gesichtspunkten, wie Bremsweg und Fahrstabilität, gewählt werden. Wie oben beschrieben kann beim Doppelfehler «DV undicht und Radkreis 1 undicht» das zugehörige Ventil SV2k1 geöffnet bleiben um mit einer ständigen Kolbenbewegung der Druckversorgung DV den Ist-Druck Pist auf Soll-Druckniveau Psoll zu halten, so können auch bei einem Doppelfehler z.B. «Radbremszylinder RZ1 undicht und Radbremszylinder RZ2 undicht» beide Ventile SV2k1 und SV2k2 geöffnet bleiben um mit einer ständigen Kolbenbewegung der Druckversorgung DV den Ist-Druck Pist auf Soll-Druckniveau Psoll zu halten. Wie bereits erwähnt hat dies den Vorteil, dass trotz Fehler die normale Bremswirkung in allen Radbremszylindern aufrechterhalten bleibt. Auch in diesem Fall gilt, dass wenn bei dem Soll-Druckniveau die Summe der beiden Leckraten beider Radkreise, RK1 und RK2 die maximale Förderrate der Druckversorgung DV übersteigt, der Solldruck Psoll nicht erreicht wird, und der Ist-Druck Pist bleibt niedriger als der Soll-Druck Psoll. Wenn die individuellen Leckraten beider Radkreise, z.B. RK1 und RK2, bereits größer sind als die maximale Förderleistung der Druckversorgung DV, dann werden beide Ventile SV2k1 und SV2k2 geschlossen. Übersteigt die Leckrate nur an einem Radkreis, z.B. RK1, die maximale Förderleistung der Druckversorgung DV, dann wird nur das Ventil SV2k1 geschlossen. Übersteigt nur die Summe der Leckraten der beiden Radkreise, z.B. RK1 und RK2, die maximale Förderleistung der Druckversorgung DV, dann kann nach fahrdynamischen Aspekten wie Bremsweg und Fahrstabilität entschieden werden, welches Ventil SV2k1 oder SV2k2 geschlossen wird. Auch hier gilt, d.h. wenn z.B. Ventil SV2k1 trotz Undichtigkeit des Radkreises 1 geöffnet bleibt, dass wenn dabei Bremsflüssigkeit aus dem Bremssystem abfließt, dann macht sich dies bemerkbar durch eine Reduzierung des Niveaus im Vorratsbehälter VB, so dass die Kompensation des Leckflusses zeitlich begrenzt werden kann, und das Ventil SV2k1 rechtzeitig geschlossen werden kann, damit ausreichend Bremsflüssigkeit für nachfolgenden Bremsungen im Vorratsbehälter VB bleibt. Wenn Bremsflüssigkeit aus dem Bremssystem abfließt, soll einerseits noch das Risiko berücksichtigt werden, dass die Umwelt mit Bremsflüssigkeit verschmutzt werden kann, und andererseits, dass Feuer entstehen kann, wenn die leicht brennbare Bremsflüssigkeit auf heiße Teile, wie z.B. die Bremsscheibe, trifft. Dieses Risiko kann reduziert werden, in dem das Ventil SV2k1 nicht geöffnet wird.

Beim intakten Bremssystem gehört zu jedem Bremspedalweg ein definierter Druck, der Solldruck, in dem Hauptbremszylinder SHZ/HZ, s. Fig. 1, der die Pedalcharakteristik festlegt. Der Druck im Hauptbremszylinder wird gemessen, z.B. direkt mit einem Drucksensor DG-SHZ, der Ist-Druck, oder indirekt mit einem Kraft-Weg-Sensor (nicht dargestellt) welcher z.B. die Pedalkraft messen kann. Der Bremspedalweg wird gemessen über einen Pedalwegsensor - nicht dargestellt. So kann zu jedem Bremspedalweg ein Soll-Druck im Hauptbremszylinder bestimmt werden. Bei Undichtigkeit des Hauptbremszylinders SHZ/HZ oder des Ventils 9, s. Fig. 1, ändert sich das Volumen im Hauptbremszylinder wodurch der Ist-Druck im Hauptbremszylinder SHZ/HZ von dem Sol-Ddruck Wert abweicht.

Der Fehler wird durch permanenten Vergleich des Ist-Drucks mit dem Solldruck im Hauptbremszylinder SHZ/HZ entdeckt. In der Rückfallebene werden, wenn die Differenz zwischen Ist-Druck und Soll-Duck einen wählbaren Grenzwert überschreitet, die Ventile SV2k1, ..., SV2k4, geschlossen und das Ventil 9 geöffnet. Über die Druckversorgung DV wird die Volumenänderung im Hauptbremszylinder SHZ/HZ kompensiert, derart, dass bei Verlust von Volumen aus dem Hauptbremszylinder Volumen von der Druckversorgung dem Hauptbremszylinder zugeführt wird, oder bei Erhöhung von Volumen in dem Hauptbremszylinder SHZ/HZ Volumen von der Druckversorgung aus dem Hauptbremszylinder abgeführt wird, bis der Ist-Druck dem Soll-Druck gleicht. Danach wird das Ventil 9 geschlossen, die Ventile SV2k1, ..., SV2k4 werden geöffnet. Die Druckversorgung DV wird nun wieder für die Bremsdruckregelung in den Radbremszylinder RZ1, ..., RZ4 verwendet, bis die Differenz zwischen Ist-Druck und Soll-Druck wieder den wählbaren Grenzwert überschreitet, wonach der Vorgang der Rückfallebene sich wiederholt. Die Bremspedalcharakteristik und das Bremspedalgefühl bleiben hierdurch weitgehend normal. Es kann jedoch zu leichten Vibrationen des Bremspedals kommen.

In der nachfolgenden Tabelle sind Anhaltswerte für die Diagnose aufgelistet:

| Ereignis | Ungefährer Wert |
|---|---|
| Maximaler Volumenstrom für die Druckversorgung aus TTL-Forderung Anmerkung: TTL steht für "Time To Lock" und ist die kleinste Zeit in der 100bar Bremsdruck in den Radbremszylindern erreicht wird. Eine typische Forderung ist: TTL=150ms | $Q_{DV,max}$ = 66 cm$^3$/s = 6.6 cm$^3$/100 ms = 1.2 cm$^3$/20 ms TD (TD = Diagnosezeit = 20ms) |
| Maximaler Volumenstrom durch ein Ventil SV2k (aus TTL-Forderung): | $Q_{SV2k,max}$= 22 cm$^3$/s = 2.2 cm$^3$/100ms = 0.44cm$^3$/20ms TD |

(fortgesetzt)

| Ereignis | Ungefährer Wert |
|---|---|
| Volumenstrom SV2k mit Schmutzpartikel im Ventilsitz (Leckfluss $Q_{SV2k,Leck}$) bei 50bar Differenzdruck über das Ventil: | $Q_{SV2k,Leck}$ = 8 cm$^3$/s = 0.8 cm$^3$/100 ms = 0.16 cm$^3$/ 20 ms TD |
| Volumenstrom EV mit Schmutzpartikel im Ventilsitz (Leckfluss $Q_{EV,Leck}$) bei 50bar Differenzdruck über das Ventil: Volumenstrom RV vom EV mit Schmutzpartikel im Ventilsitz (Leckfluss $Q_{RV,Leck}$) bei 50bar Differenzdruck über das Ventil: | QSV,Leck = 8 cm$^3$/s<br>$Q_{RV,Leck}$ = 12 cm$^3$/s |
| DV-Kolbenfläche | Ak = 4.4 cm$^2$ |
| DV-Kolbenverschiebung für Volumenverschiebung von 0,16cm$^3$ | Sk = 0,4mm |
| DV-Kolbengeschwindigkeit bei Leckfluss $Q_{SV2k,Leck}$ | $Vk_{Leck}$ = 0,4mm/20ms TD |

Bezugszeichenliste

1 Sensorelement
2 Target im Schwimmer
3 Rücklaufleitung zum VB
4 DV spezifische Ventilschaltung
5 einkreisige Druckversorgung
6 Anker 6 / 6a
7 / 7a Ventilstössel
8 Ventilsitz
9 Trennventil
RZ1 - RZ4 Radbremszylinder
BK1/BK2 Bremskreise
RK1 Radkreis 1
RK2 Radkreis 2
RK3 Radkreis 3
RK4 Radkreis 4
HCU Gesamte Hydraulikeinheit mit DV und Ventilen
VB Vorratsbehälter
HL1 - HL4 Hydraulikleitungen ausserhalb der HCU zum RZ
HL5 Hydraulikleitungen von SHZ zu BV
KTV Kreistrennventil
DV Druckversorgung
DG Druckgeber
EM1/2 elektrischer Magnetkreis ½
EIV Elektrische Ventilansteuerung
elEM Elektrische Motoransteuerung der elektromechanischen Bremse
9 Permanentmagnet
10 Polplatte
11 elektromagnetischer Rückschluss
12 Kunststoffkörper
13 Rückstellfeder
SV2k stromlos offenes Magnetventil ohne Rückschlagventil mit einer Kraftzusatzeinrichtung

**Patentansprüche**

1. Bremssystem mit

   - mindestens zwei Radbremszylindern (RZ$_{1-4}$), die jeweils Bestandteil von getrennten Radkreisen (RK$_{1-4}$) sind,
   - mindestens einer Druckversorgung (DV), die zumindest zum Druckaufbau ($p_{auf}$) in den Radbremszylindern

(RZ$_{1-4}$) dient,
- mindestens einem Vorratsbehälter (VB),
- mindestens einer elektronischen Steuer- und Regeleinrichtung (ECU)
- Schaltventilen (SV2K$_{1-4}$), wobei jeder Radbremszylinder (RZ$_{1-4}$) über jeweils eine hydraulische Verbindungsleitung mit einem Schaltventil (SV2K$_{1-4}$) verbunden ist, welches zum Trennen und Verbinden der hydraulischen Verbindung des jeweiligen Radbremszylinders (RZ$_{1-4}$) und mindestens einer weiteren hydraulischen Hauptleitung, über die das Schaltventil (SV2K$_{1-4}$) zumindest mit der Druckversorgung (DV) verbindbar bzw. verbunden ist, dient,

wobei jeweils die hydraulische Verbindungsleitung und der daran angeschlossene Radbremszylinder (RZ$_{1-4}$) Bestandteil eines Radkreises (RK$_{1-4}$) sind, **dadurch gekennzeichnet, dass** eine Diagnose der jeweiligen Undichtigkeit der einzelnen Radkreise (RK$_{1-4}$) erfolgt und dass in Abhängigkeit des Diagnoseergebnisses eine elektronische Steuer- und Regeleinrichtung (ECU) entscheidet, ob ein Radkreis (RK1-4) mittels dauerhaften Schließen des zugehörigen Schaltventils (SV2K$_{1-4}$) abgeschaltet oder weiter für die Erzeugung einer Bremswirkung betrieben wird.

2. Bremssystem nach Anspruch 1, **dadurch gekennzeichnet, dass** der Grad der Undichtigkeit bzw. der Leckfluss (Q$_{leck}$) in einem Radkreis (RK$_{1-4}$) anhand einer oder mehrerer der nachfolgenden Methoden a) bis e) ermittelt wird:

   a) Bestimmung der erforderlichen Menge an Hydraulikfluid, welche zur Erzielung eines Solldruckes (p$_{soll}$) in dem jeweiligen Radkreis (RK$_{1-4}$) zusätzlich zur vorbestimmten Fluidmenge mittels der Druckversorgung (DV) nachgefördert werden muss;
   b) Bestimmung eines ermittelten absoluten Druckabfalls (dp$_{ab}$) und/oder Druckabfallgradienten (p$_{ab}$/dt) in dem jeweiligen Radkreis (RK1-4);
   c) Bestimmung der Druckabweichung (dp = D$_{soll}$ - p$_{ist}$) vom Solldruckwert (p$_{soll}$) beim Druckaufbau in dem jeweiligen Radkreis (RK$_{1-4}$), indem eine zur Erzielung des Solldrucks (p$_{soll}$) vorbestimmte Fluidmenge (q) in den Radkreis (RK$_{1-4}$) gefördert wird und anschließend der Ist-Druck (p$_{ist}$) ermittelt wird;
   d) Diagnose der Undichtigkeit im Radkreis (RK$_{1-4}$) über zeitliche Messung des Druckes (p$_{ist}$) in der das Schaltventil (SV2K$_{1-4}$) und der Druckversorgung (DV) verbindenden Hydraulikleitung () während des Druckaufbaus mittels der Druckversorgung (DV) oder bei abgeschalteter Druckversorgung (DV);
   e) Messung des Aufnahmevolumens (Q) des jeweiligen Radkreises (RK$_{1-4}$) über die Druckversorgung (DV) zur Erzielung eines Soll-Druckes (p$_{soll}$), wobei das Aufnahmevolumen (Q) mittels der Druckversorgung (DV) ermittelt wird, insbesondere über Strommessung des Antriebsmotors (M) der Druckversorgung (DV) und/oder des Kolbenweges (ds) des Kolbens der Druckversorgung (DV);

3. Bremssystem nach Anspruch 1 oder 2, **dadurch gekennzeichnet, dass** bei Überschreiten eines oberen Grenzwertes (Q$_{high}$) bzw. Grenzwertbereiches (dQ$_{high}$) der Undichtigkeit eines Radkreises (RK$_{1-4}$) das jeweils zugehörige Schaltventil (SV2K$_{1-4}$) dauerhaft geschlossen wird und damit eine Bremswirkung mit diesem Radbremszylinder (RZ$_{1-4}$) nicht mehr erfolgt, und dass unterhalb des oberen Grenzwertes (Q$_{high}$) und oberhalb eines unteren Grenzwertes (Q$_{low}$) eine zeitlich begrenzte und/oder dauerhafte Nachförderung zur Erzielung des einzustellenden Bremsdruckes (p$_{soll}$) in dem jeweiligen Radbremszylinder (RZ$_{1-4}$) erfolgt, wobei insbesondere entweder der obere Grenzwert (Q$_{high}$) durch die maximale Förderleistung der Druckversorgung (DV) zur Druckerhöhung bestimmt ist und/oder bei einem Leckfluss (Q$_{leck}$) von 50 - 90% der maximalen Förderleistung der Druckversorgung (DV) der Leckfluss (Q$_{leck}$) mittels der Druckversorgung (DV) durch Nachfördern ausgeglichen wird, derart, dass sich keine oder nur geringfügige Verringerung der Bremswirkung ergibt.

4. Bremssystem nach einem der Ansprüche 3, **dadurch gekennzeichnet, dass** zur Optimierung der Bremswirkung und Fahrstabilität eine elektronische Steuer- und Regeleinrichtung (ECU) ermittelt, ob und welcher bzw. welche undichte(n) Radkreis(e) (RK$_{1-4}$) durch dauerhaftes Schließen des bzw. der jeweiligen Schaltventils (SV2K$_{1-4}$) abgeschaltet wird bzw. werden.

5. Bremssystem nach einem der vorhergehenden Ansprüche, **dadurch gekennzeichnet, dass** entweder ein zu einem Radbremszylinder gehörendes Auslassventil (AV$_{1-4}$) Bestandteil des jeweiligen Radkreises (RK$_{1-4}$) ist und/oder das Bremssystem ein Bremspedal, insbesondere in Form eines mechanisch auf einen Hauptbremszylinder (SHZ, THZ) wirkenden Bremspedal oder eines elektronischen Bremspedals für ein Brake-bywire-Bremssystem, aufweist.

6. Bremssystem nach einem der vorhergehenden Ansprüche, **dadurch gekennzeichnet, dass** entweder

   - mittels der Diagnose Einfachfehler, Doppelfehler und die Leckrate (dQ; dQ/dt) im Bremssystem detektiert werden

und/oder

- parallel zum Schaltventil (SV2K$_{1-4}$) kein Rückschlagventil (RV) geschaltet ist

und/oder

- bei Überschreiten eines gewissen Leckflusses (Q$_{leck, min}$) in mindestens einem Radkreis (RK$_{1-4}$) oder der Summe aller ermittelten Leckflüsse (ΣQ$_{leck,1-4}$) das Bremssystem eine Warnmeldung, insbesondere eine optische und/oder akustische Warnung, insbesondere mittels einer Anzeige, den Ausfall des mindestens einen Radkreises (RK$_{1-4}$) abgibt

und/oder

- bei der Diagnose der Undichtigkeit in einem Radkreis (RK$_{1-4}$) die Druck-Volumen-Kennlinie (DVK) des jeweiligen Radkreises (RK$_{1-4}$) berücksichtigt bzw. verwendet wird.

7.  Bremssystem nach einem der vorhergehenden Ansprüche, **dadurch gekennzeichnet, dass**

- zwischen der Druckversorgung (DV) und einem Schaltventil (SV2K$_{1-4}$) maximal zwei weitere Ventile (BP1, MVDV1, MVDV2), insbesondere Schaltventile, in der hydraulischen Verbindungsleitung angeordnet sind

und/oder

- zwischen der Druckversorgung (DV) und einem Schaltventil (SV2K$_{1-4}$) mindestens eines Radkreises (RK1, RK2) maximal zwei weitere Ventile (MVDV1, MVDV2, BP1), insbesondere Schaltventile, in der hydraulischen Verbindungsleitung angeordnet sind, und dass zwischen der Druckversorgung (DV) und mindestens einem weiteren Schaltventil (SV2K$_{1-4}$) eines anderen Radkreises (RK3, RK4) nur ein weiteres Ventil (MVDV1, MVDV2), insbesondere Schaltventil, in der hydraulischen Verbindungsleitung angeordnet ist.

8.  Bremssystem nach einem der vorhergehenden Ansprüche, **dadurch gekennzeichnet, dass** alle Radkreise (RK$_1$, RK$_2$, Rk$_3$, RK$_4$) zu einem Bremskreis (BK) gehören, und über eine gemeinsame hydraulische Hauptleitung (HL) entweder

a) mit dem einem einzigen Arbeitsraum (A) eines Plungersystems der Druckversorgung (DV) verbunden bzw. über mindestens ein Ventil (MVDV1) von dem Arbeitsraum (A) trennbar sind,

oder

b) mit beiden Arbeitsräumen (A1, A2) eines doppeltwirkenden Kolben-Zylinder-Systems der Druckversorgung (DV) verbunden bzw. verbindbar sind, wobei dabei in beiden Hubrichtungen des doppeltwirkenden Kolbens ein Druckabbau und/oder Druckaufbau in zumindest einem Radkreis (RK$_{1-4}$) erfolgen kann,

wobei optional mindestens einem Radbremszylinder (RZ$_{1-4}$), insbesondere zwei oder allen Radbremszylindern, jeweils ein Auslassventil (AV) zugeordnet ist bzw. sind.

9.  Bremssystem nach einem der Ansprüche 1 bis 14, **dadurch gekennzeichnet, dass** jeweils zwei Radkreise (RK$_1$, RK$_2$; Rk$_3$, RK$_4$) zu einem Bremskreis (BK1, BK2) gehören, wobei die Bremskreise jeweils hydraulische Bremskreisleitungen (HL1, HL2) aufweisen, wobei insbesondere

- die Bremskreise (BK1, BK2) über ein Kreistrennventil (BP1) miteinander hydraulisch verbindbar bzw. voneinander hydraulisch trennbar sind

und/oder

- jeder Bremskreis (BK1, BK2) über eine separate hydraulische Leitung mit jeweils einem Arbeitsraum (A1, A2) eines doppeltwirkenden Kolben-Zylinder-Systems der Druckversorgung (DV) verbunden bzw. verbindbar ist, wobei optional in jeder hydraulischen Leitung ein Trennventil angeordnet sein kann.

10. Bremssystem nach einem der Ansprüche 5 9, **dadurch gekennzeichnet, dass** mindestens einem Radbremszylinder (RZ1-4), insbesondere jeweils einem Radbremszylinder je Bremskreis (BK1, BK2), ein Auslassventil (AV) zugeordnet ist oder nur ein einziges Auslassventil (AV) für das gesamte Bremssystem vorgesehen ist.

11. Bremssystem nach einem der vorhergehenden Ansprüche, **dadurch gekennzeichnet, dass**

zusätzlich zur Diagnose der Radkreise (RK$_{1-4}$)

a) eine Diagnose der zwischen den Schaltventilen (SV2K$_{1-4}$) und der Druckversorgung angeordneten Ventile (MVDV1, MVDV2, BP1, BP2) auf Funktion und/oder Dichtigkeit erfolgt

und/oder

b) eine Diagnose der Funktion und/oder Dichtigkeit der Schaltventile (SV2K$_{1-4}$) erfolgt

und/oder

c) eine Diagnose der Funktion und/oder Dichtigkeit der Druckversorgung (DV) erfolgt

und/oder

zur Diagnose der Undichtigkeit in einem oder mehreren Radkreis(en) (RK$_{1-4}$) zunächst alle Schaltventile (SV2K$_{1-4}$) aller Radkreise (RK$_{1-4}$) geöffnet werden und zur Einstellung eines Soll-Druckes (p$_{soll}$) in den Radkreisen die Druckversorgung (DV) verwendet wird, wobei der Ist-Druck (p$_{ist}$) mit dem Soll-Druck (p$_{soll}$) verglichen wird, und dass bei Überschreiten einer bestimmten Abweichung eine weitere Diagnose der einzelnen Radkreise (RK$_{1-4}$) nacheinander erfolgt, bis entweder

a) bei einem Radkreis (RK$_i$) eine, insbesondere zur Abweichung zwischen zuvor ermitteltem Ist-Druck (pist) und Soll-Druck (psoll) passende Undichtigkeit ermittelt wird

oder

b) alle Radkreise (RK1-4) nacheinander auf Undichtigkeit geprüft sind.

12. Bremssystem nach Anspruch 11, **dadurch gekennzeichnet, dass** zur Prüfung der Undichtigkeit eines einzelnen Radkreises (RKi) zunächst alle Schaltventile (SK2k1-4) aller Radkreise eines oder aller Bremskreis(es) (BK1, BK2) geschlossen werden um danach das zum überprüfenden Radkreis (RK$_i$) gehörende Schaltventil (SV2K$_i$) zu öffnen um dann entweder

a) einen Soll-Druck (p$_{soll}$) in dem jeweiligen Radkreis (RK$_i$) bzw. dessen Bremszylinder (RZ$_i$) mittels der Druckversorgung einzustellen, wobei dabei der Ist-Druck (p$_{ist}$) mittels eines Druckgebers (DG) und/oder anhand des gemessenen Antriebsstromes des Antriebsmotors (M) der Druckversorgung (DV) ermittelt wird, und dass anhand einer Abweichung vom ermittelten Soll-Druck (p$_{soll}$) und ermitteltem Ist-Druck (p$_{ist}$) der Grad der Undichtigkeit ermittelt bzw. abgeschätzt wird,

oder

b) keine Druckänderung mittels der Druckversorgung (DV) vorzunehmen und den Ist-Druck im jeweiligen Radkreis bzw. Bremskreis, insbesondere mittels eines Druckgebers (DG) zu ermitteln, und dass anhand eines ermittelten Druckabfalls der Grad der Undichtigkeit ermittelt bzw. abgeschätzt wird.

13. Bremssystem nach einem der vorhergehenden Ansprüche, **dadurch gekennzeichnet, dass** die Druckversorgung (DV) einen elektromotorischen Antrieb (M) aufweist, welcher

a) ein Kolbenzylindersystem entweder mit

aa) einem Einfachhubkolben und einem Arbeitsraum oder

bb) einem Doppelhubkolben mit zwei Arbeitsräumen antreibt, oder

b) eine Rotationspumpe antreibt,

wobei optional bei Verwendung einer Rotationspumpe oder einer Kolbenpumpe für die Druckversorgung (DV) zur Abtrennung des Druckausganges der Pumpe vom Bremskreis ein Magnetventil (MVDV) oder ein Rückschlagventil (RV) vorgesehen ist, insbesondere der Druckabbau (Pab) über die den Radbremszylindern (RZ$_i$) zugeordneten Auslassventile (AV) erfolgt, wobei insbesondere zur Erzielung eines Soll-Gradienten des Druckabbaus (Pab) ein, zwei oder mehr Auslassventile (AV) geöffnet werden.

14. Bremssystem nach einem der vorhergehenden Ansprüche, **dadurch gekennzeichnet, dass** die Diagnose zur Prüfung der Undichtigkeit im Bremssystem bzw. in den einzelnen Radkreisen (RK1-4) zu einem der nachfolgend aufgeführten Zeitpunkten bzw. Fahrsituationen erfolgt bzw. erfolgen kann:

a) während einer Bremsung,

b) während des Fahrzeugstillstandes oder bei Geschwindigkeiten kleiner einer maximalen Geschwindigkeit (v$_{max}$), insbesondere z.B. kleiner oder gleich 30 km/h,

c) in bestimmten Zeitintervallen,

d) bei jedem Fahrzeugstart.

**15.** Bremssystem nach einem der vorhergehenden Ansprüche, **dadurch gekennzeichnet, dass**

a) bei der Diagnose jeder Radkreis des Bremssystems auf Ausfall geprüft wird, und/oder

b) bei der Diagnose die Ist-Kolbenposition ($Sk_{ist}$) der Druckversorgung (DV) und der Ist-Druck ($p_{ist}$) im Bremssystem werden, und/oder bei der Diagnose die abgespeicherten Druck-Volumenkennlinien (DKV) des Bremssystems und/oder der Radkreise verwendet werden, und/oder

c) aus dem Druck im Bremssystem mit Verwendung der Druck-Volumenkennlinien (DKV) eine Soll-Kolbenposition ($Sk_{soll}$) der Druckversorgung (DV) abgeleitet wird, und/oder

d) aus der Differenz zwischen Ist-Kolbenposition und Soll-Kolbenposition eine Fehlfunktion des Bremssystems abgeleitet wird, und/oder

e) bei einer Fehlfunktion durch Undichtigkeit der Leckagevolumenstrom durch entsprechendes Nachfördern mittels der Druckversorgung (DV) ausgeglichen wird.

**16.** Bremssystem nach einem der vorhergehenden Ansprüche, **dadurch gekennzeichnet, dass** entweder

- eine oder beide hydraulische Hauptleitung(en) (HL1, HL2) des Bremskreises (BK) bzw. der Bremskreise (BK1, BK2) mit einem oder jeweils einem Arbeitsraum eines Hauptbremszylinders, insbesondere in Form eines Single-Hauptbremszylinders (SHZ) oder eines Tandem-Hauptbremszylinders (THZ) in hydraulischer Verbindung sind, wobei diese Verbindung(en) mittels eines oder zweier, insbesondere "normaly open", Schaltventils bzw. Schaltventile (9) unterbrechbar sind

und/oder

- zumindest ein Bremskreis (BK, BK1) bzw. die Bremskreise (BK1, BK2) mittels eines oder zweier, insbesondere "normaly closed", Schaltventile (MVe, BP1, BP2) von der Druckversorgung (DV), insbesondere im Fehlerfalle, abtrennbar sind,

und/oder

- die elektromagnetischen Schaltventile ($SV2K_{1-4}$) und/oder Antriebe der Druckversorgung (DV) mindestens zweifach-redundante Wicklungen und/oder Ansteuerungen aufweisen.

**17.** Bremssystem nach einem der vorhergehenden Ansprüche, **dadurch gekennzeichnet, dass** die Radkreise (RK1-4) auf zwei Bremskreise (BK1, BK2) verteilt sind, und dass die beiden Bremskreise (BK1, BK2) mittels einer Hydraulikleitung, welche mittels eines Kreistrennventils (BP1) absperrbar ist, verbunden sind, und dass einer Bremskreise (BK2) fest an die Druckversorgung ohne zwischengeschaltetes Magnetventil angeschlossen bzw. mit dieser verbunden ist, und dass der andere Bremskreis (BK1) über eine hydraulische Verbindung (HL5) mit dem Hauptbremszylinder (SHZ, THZ) verbunden ist, wobei diese hydraulische Verbindung (HL5) mittels eines "Normaly Open" Schaltventils (9) absperrbar ist.

**18.** Bremssystem nach einem der vorhergehenden Ansprüche, **dadurch gekennzeichnet, dass** das Bremssystem

a) ausschließlich rein hydraulisch wirkende Radbremszylinder (RZ1-4)

und/oder

b) sowohl rein hydraulisch wirkende Radbremszylinder (Rz1, RZ2) als auch elektromotorisch betätigte Radbremsen (EMB1, EMB2) aufweist

und/oder

c) über ein Anti-Blockiersystem (ABS) und/oder ein elektronisches Stabilitäts-Programm (ESP) verfügt bzw. diese nachbildet.

**19.** Bremssystem nach einem der vorhergehenden Ansprüche, **dadurch gekennzeichnet, dass** entweder

- bei Ausfall mindestens eines Radkreises ($RK_{1-4}$) bei Auftreten eines Giermoments die Giermomentsteuerung des elektronischen Stabilisierungssystems (ESP) bei der Drucksteuerung verwendet wird bzw. eingreift

und/oder

- eine Erkennung einer Volumenänderung im Hauptbremszylinder (SHZ/HZ), insbesondere durch Undichtigkeiten des Hauptbremszylinders (SHZ/HZ) oder Undichtigkeit des Ventils (9) durch permanenten Vergleich des Soll-Drucks im Hauptbremszylinder (SHZ/HZ), welcher aus dem gemessenen Pedalweg abgeleitet wird, mit dem Ist-Druck im Hauptbremszylinder (SHZ/HZ) erfolgt, und/oder dass bei Überschreitung eines wählbaren Grenzwerts, eine Kompensation der Volumenänderung mittels der Druckversorgung (DV) zum Beibehalt der normalen Bremspedalcharakteristik erfolgt, wobei während der Kompensation die Druckregelung in den Radbremszylinder angehalten wird,

und/oder
- zwischen den den Radkreisen (RK$_{1-4}$) zugeordneten Schaltventilen (SV2K$_{1-4}$) und der Druckversorgung (DV) keine weiteren Ventile vorgesehen sind.

20. Bremssystem nach einem der vorhergehenden Ansprüche, wobei das Bremssystem ein Schaltventil (SV2K$_{1-4}$) aufweist, Schaltventil (SV2K$_{1-4}$) ein Magnetventil mit einem elektromagnetischen Antrieb (EM1) ist, über den ein Ventilstellglied bzw. Ventilstößel (7) zwischen einer geöffneten Ventilstellung und einer geschlossenen Ventilstellung verstellbar ist, **dadurch gekennzeichnet, dass** das Schaltventil (SV2K$_{1-4}$) eine Kraftzusatzeinrichtung (EM2, 9) aufweist, die mittels eines eigenen Magnetfeldes eine Kraft (FM2) auf das Ventilstellglied bzw. Ventilstößel (7) ausübt, wobei insbesondere das Schaltventil (SV2K$_{1-4}$) eine Rückstellfeder (RF) aufweist, die eine Kraft auf das Ventilstellglied bzw. den Ventilstößel (7) ausübt, welche das Zureißen des Ventils verhindert, wobei optional das Schaltventil (SV2K$_{1-4}$) ein stromlos offenes Ventil oder ein stromlos geschlossenes Ventil ist, wobei stromlos bedeutet, dass der elektromagnetische Antrieb (EM1) nicht bestromt ist und/oder die Kraft (FM2) der Kraftzusatzeinrichtung (EM2, 9) mittels eines bestrombaren Elektromagneten und/oder eines Permanentmagneten erzeugbar ist bzw. erzeugt wird.

21. Bremssystem nach Anspruch 20, **dadurch gekennzeichnet, dass** die Kraft (FM2) der Kraftzusatzeinrichtung (EM2, 9) der Kraft (FM1) des elektromagnetischen Antriebs (EM1) entgegengerichtet ist, wobei insbesondere die Kraft (FM2) der Kraftzusatzeinrichtung (EM2, 9) der Kraft (FRF) einer möglichen Rückstellfeder (RF) gleichwertig ist, und bei entsprechender Dimensionierung des Magnetkreises keine Rückstellfeder (RF) erforderlich ist.

22. Bremssystem nach einem der Ansprüche 20 bis 21, **dadurch gekennzeichnet, dass** mit der Kraftzusatzeinrichtung (EM1) nur dann durch Bestromen der Spule eine Kraft (FM2) generiert wird, sofern der Zustand des Bremssystems ein ungewolltes Zuziehen des Schaltventil (SV2K$_{1-4}$) erwarten lässt, so dass nur in einem derartigen Zustand die Kraftzusatzeinrichtung (EM1) Energie verbraucht und/oder die elektromagnetische Haltekraft über die Stromstärke und Bewegung des Ankers mittels Diagnosefunktionen diagnostiziert wird.

**Claims**

1. Brake system with

   - at least two wheel brake cylinders (RZ$_{1-4}$), each of which is part of separate wheel circuits (RK$_{1-4}$),
   - at least one pressure supply (DV), which serves at least to build up pressure (p$_{auf}$) in the wheel brake cylinders (RZ$_{1-4}$),
   - at least one reservoir (VB),
   - at least one electronic control and regulation device (ECU)
   - switching valves (SV2K$_{1-4}$), wherein each wheel brake cylinder (RZ$_{1-4}$) is connected via a hydraulic connection line to a switching valve (SV2K$_{1-4}$), which serves to disconnect and connect the hydraulic connection of the respective wheel brake cylinder (RZ$_{1-4}$) and at least one further hydraulic main line, via which the switching valve (SV2K$_{1-4}$) is connected or can be connected to at least the pressure supply (DV),

   wherein the hydraulic connecting line and the wheel brake cylinder (RZ$_{1-4}$) connected thereto are each part of a wheel circuit (RK$_{1-4}$), **characterized in that** a diagnosis of the respective leakage of the individual wheel circuits (RK$_{1-4}$) is performed and that, depending on the diagnostic result, an electronic control and regulation device (ECU) decides whether a wheel circuit (RK$_{1-4}$) is switched off by permanently closing the associated switching valve (SV2K$_{1-4}$) or continues to be operated to generate a braking effect.

2. Braking system according to claim 1, **characterized in that** the degree of leakage or the leakage flow (Q$_{leck}$) in a wheel circuit (RK$_{1-4}$) is determined using one or more of the following methods a) to e):

   a) Determination of the required amount of hydraulic fluid which must be supplemented to the predetermined fluid quantity by means of the pressure supply (DV) in order to achieve a target pressure (p$_{soll}$) in the respective wheel circuit (RK1-4);
   b) Determination of a calculated absolute pressure drop (dpab) and/or pressure drop gradient (p$_{ab}$/dt) in the respective wheel circuit (RK$_{1-4}$);
   c) Determination of the pressure deviation (dp = psoll - pist) from the target pressure value (p$_{soll}$) during pressure build-up in the respective wheel circuit (RK$_{1-4}$) by pumping a predetermined fluid quantity (q) into the wheel circuit

$(RK_{1-4})$ to achieve the set pressure $(p_{soll})$ and then determining the actual pressure $(p_{ist})$;

d) Diagnosis of leaks in the wheel circuit (RK1-4) by the pressure (pist) in the hydraulic line connecting the switching valve $(SV2K_{1-4})$ and the pressure supply (DV) during pressure build-up by means of the pressure supply (DV) or when the pressure supply (DV) is switched off;

e) Measurement of the absorption volume (Q) of the respective wheel circuit $(RK_{1-4})$ via the pressure supply (DV) to achieve a target pressure $(p_{soll})$, wherein the absorption volume (Q) is determined by means of the pressure supply (DV), in particular by measuring the current of the drive motor (M) of the pressure supply (DV) and/or the piston stroke (ds) of the piston of the pressure supply (DV).

3. Braking system according to claim 1 or 2, **characterized in that** when an upper limit value $(Q_{high})$ or limit value range $(dQ_{high})$ for the leakage of a wheel circuit $(RK_{1-4})$ is exceeded, the respective associated switching valve $(SV2K_{1-4})$ is permanently closed, thereby preventing any braking action from occurring with this wheel brake cylinder $(RZ_{1-4})$, and that below the upper limit value $(Q_{high})$ and above a lower limit value $(Q_{low})$, a temporary and/or permanent follow-up delivery takes place in order to achieve the brake pressure $(p_{soll})$ to be set in the respective wheel brake cylinder $(RZ_{1-4})$, whereby in particular either the upper limit value $(Q_{high})$ is determined by the maximum delivery rate of the pressure supply (DV) for increasing the pressure and/or, in the event of a leakage flow $(Q_{leck})$ of 50-90% of the maximum delivery rate of the pressure supply (DV), the leakage flow $(Q_{leck})$ is compensated by the pressure supply (DV) by means of additional delivery, such that there is no or only a slight reduction in the braking effect.

4. Braking system according to one of claims 3, **characterized in that**, in order to optimize the braking effect and driving stability, an electronic control and regulation device (ECU) determines whether and which leaky wheel circuit(s) $(RK_{1-4})$ is or are shut off by permanently closing the respective switching valve(s) $(SV2K_{1-4})$.

5. Braking system according to one of the preceding claims, **characterized in that** either an outlet valve $(AV_{1-4})$ belonging to a wheel brake cylinder is part of the respective wheel circuit $(RK_{1-4})$ and/or the brake system has a brake pedal, in particular in the form of a brake pedal acting mechanically on a master brake cylinder (SHZ, THZ) or an electronic brake pedal for a brake-by-wire brake system.

6. Braking system according to one of the preceding claims, **characterized in that** either

   - with the diagnosis single faults, double faults, and the leakage rate (dQ; dQ/dt) in the brake system and/or
   - no check valve (RV) is connected in parallel to the switching valve $(SV2K_{1-4})$ and/or
   - when a certain leakage flow $(Q_{leck,\ min})$ is exceeded in at least one wheel circuit $(RK_{1-4})$ or the sum of all determined leakage flows one wheel circuit $(RK_{1-4})$ or the sum of all determined leakage flows $(\Sigma Q_{leck,1-4})$, the brake system issues a warning message, in particular a visual and/or acoustic warning, in particular by means of a display, indicating the failure of at least one wheel circuit $(RK_{1-4})$ and/or
   - when diagnosing the leak in a wheel circuit $(RK_{1-4})$, the pressure-volume characteristic curve (DVK) of the respective wheel circuit $(RK_{1-4})$ is taken into account or used.

7. Braking system according to one of the preceding claims, **characterized in that**

   - between the pressure supply (DV) and a switching valve $(SV2K_{1-4})$ a maximum of two further valves (BP1, MVDV1, MVDV2), in particular switching valves, are arranged in the hydraulic connecting line and/or
   - between the pressure supply (DV) and a switching valve $(SV2K_{1-4})$ at least one wheel circuit (RK1, RK2), a maximum of two additional valves (MVDV1, MVDV2, BP1), in particular switching valves, are arranged in the hydraulic connecting line, and that between the pressure supply (DV) and at least one additional switching valve $(SV2K_{1-4})$ of another wheel circuit (RK3, RK4), only one further valve (MVDV1, MVDV2), in particular a switching valve, is arranged in the hydraulic connecting line.

8. Brake system according to one of the preceding claims, **characterized in that** all wheel circuits (RK1, RK2, RK3, RK4) belong to one brake circuit (BK) and are connected via a common hydraulic main line (HL) either

   a) to the single working chamber (A) of a plunger system of the pressure supply (DV) or, via at least one valve (MVDV1) from the working chamber (A),

or

b) connected to both working chambers (A1, A2) of a double-acting piston-cylinder-system of the pressure supply (DV) or can be connected, whereby in both stroke directions of the double-acting piston, pressure reduction and/or pressure build-up can occur in at least one wheel circuit ($RK_{1-4}$), whereby optionally at least one wheel brake cylinder ($RZ_{1-4}$), in particular two or all wheel brake cylinders, can be assigned one outlet valve (AV) each.

9. Brake system according to one of claims 1 to 8, **characterized in that** two wheel circuits (RK1, RK2; Rk3, RK4) belong to one brake circuit (BK1, BK2), wherein the brake circuits each have hydraulic brake circuit lines (HL1, HL2), wherein in particular

- the brake circuits (BK1, BK2) can be hydraulically connected to each other or hydraulically separated from each other via a circuit separation valve (BP1)
and/or
- each brake circuit (BK1, BK2) has a separate hydraulic line with a respective working chamber (A1, A2) of a double-acting
- each brake circuit (BK1, BK2) is or can be connected via a separate hydraulic line to a respective working chamber (A1, A2) of a double-acting piston-cylinder-system of the pressure supply (DV), wherein a separating valve can optionally be arranged in each hydraulic line.

10. Brake system according to one of claims 5 to 9, **characterized in that** at least one wheel brake cylinder ($RZ_{1-4}$), in particular one wheel brake cylinder per brake circuit (BK1, BK2), is assigned an outlet valve (AV) or only a single outlet valve (AV) is provided for the entire brake system.

11. Brake system according to one of the preceding claims, **characterized in that** in addition to the diagnosis of the wheel circuits ($RK_{1-4}$)

a) a diagnosis of the valves (MVDV1, MVDV2, BP1, BP2) arranged between the switching valves (SV2K1-4) and the pressure supply for function and/or tightness
and/or
b) a diagnosis of the function and/or tightness of the switching valves (SV2K1-4) is performed
and/or
c) a diagnosis of the function and/or tightness of the pressure supply (DV) is performed
and/or

for diagnosing leakage in one or more wheel circuits ($RK_{1-4}$) all switching valves ($SV2K_{1-4}$) of all wheel circuits ($RK_{1-4}$) are first opened and the pressure supply (DV) is used to set a target pressure ($p_{soll}$) in the wheel circuits, whereby the actual pressure ($p_{ist}$) is compared with the target pressure ($p_{soll}$), and that if a certain deviation is exceeded, a further diagnosis of the individual wheel circuits ($RK_{1-4}$) is carried out one after the other until either

a) a leak is detected in a wheel circuit (RKi), in particular for the deviation between the previously determined actual pressure (pist) and the set pressure ($p_{soll}$)
or
b) all wheel circuits ($RK_{1-4}$) have been checked for leaks one after the other.

12. Braking system according to claim 11, **characterized in that**, in order to check the tightness of an individual wheel circuit (RKi), all switching valves (SK2k1-4) of all wheel circuits of one or all brake circuits (s) (BK1, BK2) are first closed, then the switching valve (SV2Ki) belonging to the wheel circuit (RKi) to be checked is opened, and then either

a) a target pressure (psoll) in the respective wheel circuit (RKi) or its brake cylinder (RZi) using the pressure supply, whereby the actual pressure ($p_{ist}$) is determined using a pressure sensor (DG) and/or on the basis of the measured drive current of the drive motor (M) of the pressure supply (DV), and that on the basis of a deviation from the determined set pressure (psoll) and the determined actual pressure (pist), the degree of leakage is determined or estimated,
or
b) no pressure change is made by means of the pressure supply (DV) and the actual pressure in the respective wheel circuit or brake circuit is determined, in particular by means of a pressure sensor (DG), and that the degree of leakage is determined or estimated on the basis of a determined pressure drop.

13. Brake system according to one of the preceding claims, **characterized in that** the pressure supply (DV) has an electric motor drive (M) which

   a) drives a piston-cylinder system either with

   aa) a single-stroke piston and a working chamber or
   bb) a double-stroke piston with two working chambers, or

   b) drives a rotary pump,
   wherein, optionally, when using a rotary pump or a piston pump for the pressure supply (DV), a solenoid valve (MVDV) or a check valve (RV) is provided to separate the pressure output of the pump from the brake circuit, in particular the pressure reduction (Pab) is carried out via the outlet valves (AV) assigned to the wheel brake cylinders (RZi), whereby one, two, or more outlet valves (AV) are opened, in particular to achieve a target gradient of the pressure reduction (Pab).

14. Brake system according to one of the preceding claims, **characterized in that** the diagnosis for checking for leaks in the brake system or in the individual wheel circuits (RK1-4) is or can be performed at one of the following times or driving situations:

   a) during braking,
   b) while the vehicle is stationary or at speeds lower than a maximum speed (vmax), in particular, for example, lower than or equal to 30 km/h,
   c) at specific time intervals,
   d) each time the vehicle is started.

15. Brake system according to one of the preceding claims, **characterized in that**

   a) during diagnosis, each wheel circuit of the brake system is checked for failure,
   and/or
   b) during diagnosis, the actual piston position ($Sk_{ist}$) of the pressure supply (DV) and the actual pressure (pist) in the brake system are checked, and/or during the diagnosis, the stored pressure-volume characteristics (DKV) of the brake system and/or the wheel circuits are used,
   and/or
   c) a target piston position ($Sk_{soll}$) of the pressure supply (DV) is derived from the pressure in the brake system using the pressure-volume characteristics (DKV),
   and/or
   d) a malfunction of the brake system is derived from the difference between the actual piston position and the target piston position,
   and/or
   e) in the event of a malfunction due to leakage, the leakage volume flow is compensated by corresponding replenishment using the pressure supply (DV).

16. Brake system according to one of the preceding claims, **characterized in that** either

   - one or both hydraulic main lines (HL1, HL2) of the brake circuit (BK) or brake circuits (BK1, BK2) are connected to one or more working chambers of a master brake cylinder, in particular in the form of a single master brake cylinder (SHZ) or a tandem main brake cylinder (THZ), wherein this connection or these connections can be interrupted by means of one or two, in particular "normally open," switching valve or switching valves (9)
   and/or
   - at least one brake circuit (BK, BK1) or the brake circuits (BK1, BK2) can be disconnected from the pressure supply (DV) by means of one or two, in particular "normally closed," switching valves (MVe, BP1, BP2), in particular in the event of a fault,
   and/or
   - the electromagnetic switching valves (SV2K1-4) and/or drives of the pressure supply (DV) have at least double redundant windings and/or controls.

17. Braking system according to one of the preceding claims, **characterized in that** the wheel circuits ($RK_{14}$) are distributed over two brake circuits (BK1, BK2), and that the two brake circuits (BK1, BK2) are connected by means of a hydraulic line which can be shut off by means of a circuit isolating valve (BP1), and that one brake circuit (BK2) is permanently connected to the pressure supply without an intermediate solenoid valve, and that the other brake circuit (BK1) is connected to the master brake cylinder (SHZ, THZ) via a hydraulic connection (HL5), whereby this hydraulic connection (HL5) can be shut off by means of a "normally open" switch valve (9).

18. Brake system according to one of the preceding claims, **characterized in that** the brake system

   a) has exclusively purely hydraulically acting wheel brake cylinders ($RZ_{1-4}$) and/or
   b) both purely hydraulically acting wheel brake cylinders (Rz1, RZ2) and electromotively actuated wheel brakes (EMB1, EMB2)
   and/or
   c) has or replicates an anti-lock braking system (ABS) and/or an electronic stability program (ESP).

19. Braking system according to one of the preceding claims, **characterized in that** either

   - in the event of failure of at least one wheel circuit (RK1-4) when a yaw moment occurs, the yaw moment control of the electronic stabilization system (ESP) is used or intervenes in the pressure control
   and/or
   - a detection of a volume change in the master brake cylinder (SHZ/HZ), in particular due to leaks in the master brake cylinder (SHZ/HZ) or leaks in the valve (9) by permanently comparing the target pressure in the master brake cylinder (SHZ/HZ), which is derived from the measured pedal travel, with the actual pressure in the master brake cylinder (SHZ/HZ), and/or that if a selectable limit value is exceeded, compensation for the change in volume is carried out by means of the pressure supply (DV) to maintain the normal brake pedal characteristics, whereby during compensation the pressure control in the wheel brake cylinders is stopped, and/or
   - no further valves are provided between the switching valves (SV2K1-4) assigned to the wheel circuits (RK1-4) and the pressure supply (DV).

20. Braking system according to one of the preceding claims, **characterized in that** the braking system comprises a switching valve ($SV2K_{1-4}$), wherein the switching valve ($SV2K_{1-4}$) is a solenoid valve with an electromagnetic drive (EM1) via which a valve actuator or valve tappet (7) between an open valve position and a closed valve position, **characterized in that** the switching valve ($SV2K_{1-4}$) has an additional force device (EM2, 9) which exerts a force (FM2) on the valve actuator or valve tappet (7) by means of its own magnetic field, wherein in particular the switching valve ($SV2K_{1-4}$) has a return spring (RF) which exerts a force on the valve actuator or valve tappet (7) which prevents the valve from closing abruptly,
   wherein the valve ($SV2K_{1-4}$) is optionally a normally open valve or a normally closed valve, wherein normally open means that the electromagnetic drive (EM1) is not energized and/or the force (FM2) of the force-adding device (EM2, 9) can be generated or is generated by means of an energizable electromagnet and/or a permanent magnet.

21. Braking system according to claim 20, **characterized in that** the force (FM2) of the additional force device (EM2, 9) is directed opposite to the force (FM1) of the electromagnetic drive (EM1), wherein in particular the force (FM2) of the additional force device (EM2, 9) is equivalent to the force (FRF) of a possible return spring (RF), and no return spring (RF) is required if the magnetic circuit is dimensioned accordingly.

22. Braking system according to one of claims 20 to 21, **characterized in that** the force-adding device (EM1) only generates a force (FM2) by energizing the coil if the state of the brake system indicates that the switching valve (SV2K1-4), so that the force addition device (EM1) only consumes energy in such a state and/or the electromagnetic holding force is diagnosed via the current and movement of the armature by means of diagnostic functions.

**Revendications**

1. Système de freinage avec

   - au moins deux cylindres de frein de roue ($RZ_{1-4}$), qui font partie de circuits de roue séparés ($RK_{1-4}$),
   - au moins une alimentation en pression (DV), qui sert au moins à l'accumulation de pression ($p_{auf}$) dans les cylindres de frein de roue ($RZ_{1-4}$),
   - au moins un réservoir (VB),
   - au moins une unité de commande et de régulation électronique (ECU),

- des vannes de commutation ($SV2K_{1-4}$), dans lequel chaque cylindre de frein de roue ($RZ_{1-4}$) est connecté à une vanne de commutation ($SV2K_{1-4}$) via une ligne de connexion hydraulique respective, qui sert à séparer et connecter la connexion hydraulique du cylindre de frein de roue respectif ($RZ_{1-4}$) et au moins une autre ligne principale hydraulique, par l'intermédiaire de laquelle la vanne de commutation ($SV2K_{1-4}$) peut être connectée ou est connectée au moins à l'alimentation en pression (DV),

dans lequel chaque ligne de connexion hydraulique et le cylindre de frein de roue ($RZ_{1-4}$) qui y est connecté font partie d'un circuit de roue ($RK_{1-4}$), **caractérisé en ce qu'**un diagnostic de l'étanchéité respective des circuits de roue individuels ($RK_{1-4}$) est effectué, et **en ce que**, en fonction du résultat du diagnostic, une unité de commande et de régulation électronique (ECU) décide si un circuit de roue ($RK_{1-4}$) est désactivé par fermeture permanente de la vanne de commutation ($SV2K_{1-4}$) associée ou est maintenu en fonctionnement pour la génération d'un effet de freinage.

2. Système de freinage selon la revendication 1, **caractérisé en ce que** le degré de non-étanchéité ou le débit de fuite ($Q_{leck}$) dans un circuit de roue ($RK_{1-4}$) est déterminé au moyen d'une ou plusieurs des méthodes a) à e) suivantes :

a) détermination de la quantité requise de fluide hydraulique qui doit être fournie, en plus de la quantité de fluide prédéterminée au moyen de l'alimentation en pression (DV), pour atteindre une pression nominale ($p_{soll}$) dans le circuit de roue respectif ($RK_{1-4}$) ;
b) détermination d'une chute de pression absolue ($dp_{ab}$) et/ou d'un gradient de chute de pression ($p_{ab}/dt$) dans le circuit de roue respectif ($RK_{1-4}$) ;
c) détermination de l'écart de pression ($dp = p_{soll} - p_{ist}$) par rapport à la valeur de pression nominale ($p_{soll}$) lors de l'établissement de la pression dans le circuit de roue respectif ($RK_{1-4}$), en fournissant une quantité de fluide prédéterminée (q) dans le circuit de roue ($RK_{1-4}$) pour atteindre la pression nominale ($p_{soll}$) et en déterminant ensuite la pression réelle (pist) ;
d) diagnostic de la non-étanchéité dans le circuit de roue ($RK_{1-4}$) par mesure temporelle de la pression ($p_{ist}$) dans la ligne hydraulique () reliant la vanne de commutation ($SV2K_{1-4}$) et l'alimentation en pression (DV) pendant l'établissement de la pression au moyen de l'alimentation en pression (DV) ou lorsque l'alimentation en pression (DV) est désactivée ;
e) mesure du volume d'admission (Q) du circuit de roue respectif ($RK_{1-4}$) via l'alimentation en pression (DV) pour atteindre une pression nominale ($p_{soll}$), dans lequel le volume d'admission (Q) est déterminé au moyen de l'alimentation en pression (DV), plus particulièrement par mesure du courant du moteur d'entraînement (M) de l'alimentation en pression (DV) et/ou du déplacement du piston (ds) du piston de l'alimentation en pression (DV).

3. Système de freinage selon la revendication 1 ou 2, **caractérisé en ce que**, si une valeur limite supérieure ($Q_{high}$) ou une plage de valeurs limites ($dQ_{high}$) de la non-étanchéité d'un circuit de roue ($RK_{1-4}$) est dépassée, la vanne de commutation ($SV2K_{1-4}$) respective est fermée de manière permanente et si un effet de freinage ne se produit plus avec ce cylindre de frein de roue ($RZ_{1-4}$), et si, en dessous de la valeur limite supérieure ($Q_{high}$) et au-dessus d'une valeur limite inférieure ($Q_{low}$), une post-alimentation limitée dans le temps et/ou permanente est effectuée pour atteindre la pression de freinage à régler ($p_{soll}$) dans le cylindre de frein de roue respectif ($RZ_{1-4}$), dans lequel, plus particulièrement, soit la valeur limite supérieure ($Q_{high}$) est déterminée par la puissance de refoulement maximale de l'alimentation en pression (DV) pour l'augmentation de pression et/ou, dans le cas d'un débit de fuite ($Q_{leck}$) de 50 à 90 % de la puissance de refoulement maximale de l'alimentation en pression (DV), le débit de fuite ($Q_{leck}$) est compensé par l'alimentation en pression (DV) par post-alimentation, de sorte qu'il n'y ait pas de réduction ou seulement une légère réduction de l'effet de freinage.

4. Système de freinage selon l'une des revendications 3, **caractérisé en ce que**, pour l'optimisation de l'effet de freinage et de la stabilité de conduite, une unité de commande et de régulation électronique (ECU) détermine si et lequel ou lesquels des circuits de roue ($RK_{1-4}$) non étanches sont désactivés par fermeture permanente de la ou des vannes de commutation ($SV2K_{1-4}$) respectives.

5. Système de freinage selon l'une des revendications précédentes, **caractérisé en ce que** soit une vanne de sortie ($AV_{1-4}$) appartenant à un cylindre de frein de roue fait partie du circuit de roue respectif (RK1-4) et/ou le système de freinage présente une pédale de frein, plus particulièrement sous la forme d'une pédale de frein agissant mécaniquement sur un maître-cylindre (SHZ, THZ) ou d'une pédale de frein électronique pour un système de freinage brake-by-wire.

6. Système de freinage selon l'une des revendications précédentes, **caractérisé en ce que** soit :

- au moyen du diagnostic, des défauts simples, des défauts doubles et le taux de fuite (dQ ; dQ/dt) dans le système de freinage sont détectés ; et/ou

- en parallèle de la vanne de commutation ($SV2K_{1-4}$), aucune vanne anti-retour (RV) n'est connectée ; et/ou

- en cas de dépassement d'un certain débit de fuite ($Q_{leck, min}$) dans au moins un circuit de roue ($RK_{1-4}$) ou de la somme de tous les débits de fuite déterminés ($\Sigma Q_{leck,1-4}$), le système de freinage émet un message d'avertissement, plus particulièrement un avertissement visuel et/ou acoustique, notamment au moyen d'un affichage, indiquant la défaillance du ou des circuits de roue ($RK_{1-4}$) ; et/ou

- lors du diagnostic de la non-étanchéité dans un circuit de roue ($RK_{1-4}$), la caractéristique pression-volume (DVK) du circuit de roue respectif ($RK_{1-4}$) est prise en compte ou utilisée.

7.   Système de freinage selon l'une des revendications précédentes, **caractérisé en ce que** :

- entre l'alimentation en pression (DV) et une vanne de commutation ($SV2K_{1-4}$), un maximum de deux autres vannes (BP1, MVDV1, MVDV2), plus particulièrement des vannes de commutation, sont disposées dans la ligne de connexion hydraulique ; et/ou

- entre l'alimentation en pression (DV) et une vanne de commutation ($SV2K_{1-4}$) d'au moins un circuit de roue (RK1, RK2), un maximum de deux autres vannes (MVDV1, MVDV2, BP1), plus particulièrement des vannes de commutation, sont disposées dans la ligne de connexion hydraulique, et qu'entre l'alimentation en pression (DV) et au moins une autre vanne de commutation ($SV2K_{1-4}$) d'un autre circuit de roue (RK3, RK4), une seule autre vanne (MVDV1, MVDV2), plus particulièrement une vanne de commutation, est disposée dans la ligne de connexion hydraulique.

8.   Système de freinage selon l'une des revendications précédentes, **caractérisé en ce que** tous les circuits de roue ($RK_1$, $RK_2$, $RK_3$, $RK_4$) appartiennent à un circuit de freinage (BK) et sont connectés, via une ligne principale hydraulique commune (HL), soit :

a) à une seule chambre de travail (A) d'un système à plongeur de l'alimentation en pression (DV) ou peuvent en être séparés par au moins une vanne (MVDV1) de la chambre de travail (A) ; soit

b) aux deux chambres de travail (A1, A2) d'un système piston-cylindre à double effet de l'alimentation en pression (DV) ou peuvent y être connectés, dans lequel un abaissement de pression et/ou un établissement de pression peut se produire dans au moins un circuit de roue ($RK_{1-4}$) dans les deux directions de course du piston à double effet,

dans lequel une vanne de sortie (AV) est, en option, attribuée à au moins un cylindre de frein de roue ($RZ_{1-4}$), plus particulièrement à deux ou à tous les cylindres de frein de roue.

9.   Système de freinage selon l'une des revendications 1 à 14, **caractérisé en ce que** deux circuits de roue ($RK_1$, $RK_2$ ; $RK_3$, $RK_4$) appartiennent chacun à un circuit de freinage (BK1, BK2), dans lequel les circuits de freinage présentent chacun des lignes de circuit de freinage hydrauliques (HL1, HL2), dans lequel, plus particulièrement :

- les circuits de freinage (BK1, BK2) peuvent être connectés ou séparés hydrauliquement l'un de l'autre via une vanne de séparation de circuit (BP1) ; et/ou

- chaque circuit de freinage (BK1, BK2) est connecté ou peut être connecté via une ligne hydraulique séparée à une chambre de travail respective (A1, A2) d'un système piston-cylindre à double effet de l'alimentation en pression (DV), dans lequel, en option, une vanne de séparation peut être disposée dans chaque ligne hydraulique.

10.  Système de freinage selon l'une des revendications 5 à 9, **caractérisé en ce qu'**au moins un cylindre de frein de roue ($RZ_{1-4}$), plus particulièrement un cylindre de frein de roue par circuit de freinage (BK1, BK2), est associé à une vanne de sortie (AV) ou **en ce qu'**une seule vanne de sortie (AV) est prévue pour l'ensemble du système de freinage.

11.  Système de freinage selon l'une des revendications précédentes, **caractérisé en ce que** :

en plus du diagnostic des circuits de roue ($RK_{1-4}$),

a) un diagnostic des vannes (MVDV1, MVDV2, BP1, BP2) disposées entre les vannes de commutation ($SV2K_{1-4}$) et l'alimentation en pression est effectué pour leur fonction et/ou leur étanchéité ; et/ou

b) un diagnostic de la fonction et/ou de l'étanchéité des vannes de commutation ($SV2K_{1-4}$) est effectué ; et/ou

c) un diagnostic de la fonction et/ou de l'étanchéité de l'alimentation en pression (DV) est effectué ; et/ou

pour le diagnostic de la non-étanchéité dans un ou plusieurs circuits de roue ($RK_{1-4}$), toutes les vannes de commutation ($SV2K_{1-4}$) de tous les circuits de roue ($RK_{1-4}$) sont d'abord ouvertes et l'alimentation en pression (DV) est utilisée pour établir une pression nominale ($p_{soll}$) dans les circuits de roue, dans lequel la pression réelle ($p_{ist}$) est comparée à la pression nominale ($p_{soll}$), et en cas de dépassement d'un certain écart, un diagnostic supplémentaire des circuits de roue ($RK_{1-4}$) individuels est effectué successivement jusqu'à ce que soit

a) pour un circuit de roue ($Rk_i$), une non-étanchéité correspondant, plus particulièrement, à l'écart entre la pression réelle ($p_{ist}$) précédemment déterminée et la pression nominale ($p_{soll}$), soit déterminée ; soit

b) tous les circuits de roue ($RK_{1-4}$) aient été vérifiés successivement pour la non-étanchéité.

**12.** Système de freinage selon la revendication 11, **caractérisé en ce que**, pour vérifier la non-étanchéité d'un circuit de roue individuel (RKi), toutes les vannes de commutation ($SK2k_{1-4}$) de tous les circuits de roue d'un ou de tous les circuits de freinage (BK1, BK2) sont d'abord fermées, puis la vanne de commutation ($SV2K_i$) appartenant au circuit de roue à vérifier ($RK_i$) est ouverte pour ensuite soit

a) établir une pression nominale ($p_{soll}$) dans le circuit de roue respectif ($RK_i$) ou son cylindre de frein ($RZ_i$) au moyen de l'alimentation en pression, dans lequel la pression réelle ($p_{ist}$) est déterminée au moyen d'un capteur de pression (DG) et/ou sur la base du courant d'entraînement mesuré du moteur d'entraînement (M) de l'alimentation en pression (DV), et **en ce que** le degré de non-étanchéité est déterminé ou estimé sur la base d'un écart entre la pression nominale ($p_{soll}$) déterminée et la pression réelle ($p_{ist}$) déterminée ; soit

b) ne pas effectuer de changement de pression au moyen de l'alimentation en pression (DV) et déterminer la pression réelle dans le circuit de roue respectif ou le circuit de freinage, plus particulièrement au moyen d'un capteur de pression (DG), et **en ce que** le degré de non-étanchéité est déterminé ou estimé sur la base d'une chute de pression déterminée.

**13.** Système de freinage selon l'une des revendications précédentes, **caractérisé en ce que** l'alimentation en pression (DV) présente un entraînement électromoteur (M), lequel :

a) entraîne un système piston-cylindre soit avec :

aa) un piston à simple course et une chambre de travail, ou
ab) un piston à double course avec deux chambres de travail ; ou

b) entraîne une pompe rotative,

dans lequel, en option, lors de l'utilisation d'une pompe rotative ou d'une pompe à piston pour l'alimentation en pression (DV), pour la séparation de la sortie de pression de la pompe du circuit de freinage, une électrovanne (MVDV) ou une vanne anti-retour (RV) est prévue, plus particulièrement l'abaissement de pression ($P_{ab}$) s'effectue via les vannes de sortie (AV) associées aux cylindres de frein de roue ($RZ_i$), plus particulièrement pour atteindre un gradient nominal de l'abaissement de pression ($P_{ab}$), une, deux ou plusieurs vannes de sortie (AV) sont ouvertes.

**14.** Système de freinage selon l'une des revendications précédentes, **caractérisé en ce que** le diagnostic pour la vérification de la non-étanchéité dans le système de freinage ou dans les circuits de roue individuels ($RK_{1-4}$) a lieu ou peut avoir lieu à l'un des moments suivants ou dans les situations de conduite suivantes :

a) pendant un freinage,

b) pendant l'arrêt du véhicule ou à des vitesses inférieures à une vitesse maximale ($V_{max}$), plus particulièrement par exemple inférieure ou égale à 30 km/h,

c) à des intervalles de temps déterminés,

d) à chaque démarrage du véhicule.

**15.** Système de freinage selon l'une des revendications précédentes, **caractérisé en ce que**

a) lors du diagnostic, chaque circuit de roue du système de freinage est vérifié pour défaillance, et/ou

b) lors du diagnostic, la position réelle du piston ($Sk_{ist}$) de l'alimentation en pression (DV) et la pression réelle ($p_{ist}$) dans le système de freinage sont déterminées, et/ou lors du diagnostic, les caractéristiques pression-volume (DKV) stockées du système de freinage et/ou des circuits de roue sont utilisées, et/ou

c) une position nominale du piston ($Sk_{soll}$) de l'alimentation en pression (DV) est dérivée de la pression dans le système de freinage en utilisant les caractéristiques pression-volume (DKV), et/ou

d) un dysfonctionnement du système de freinage est dérivé de la différence entre la position réelle du piston et la position nominale du piston, et/ou

e) en cas de dysfonctionnement dû à une non-étanchéité, le débit volumique de fuite est compensé par une post-alimentation correspondante au moyen de l'alimentation en pression (DV).

**16.** Système de freinage selon l'une des revendications précédentes, **caractérisé en ce que** soit

- une ou les deux lignes principales hydrauliques (HL1, HL2) du circuit de freinage (BK) ou des circuits de freinage (BK1, BK2) sont en connexion hydraulique avec une ou respectivement une chambre de travail d'un maître-cylindre, plus particulièrement sous la forme d'un maître-cylindre simple (SHZ) ou d'un maître-cylindre tandem (THZ), dans lequel ces connexions peuvent être interrompues au moyen d'une ou deux vannes de commutation (9), plus particulièrement « normalement ouvertes » ; et/ou

- au moins un circuit de freinage (BK, BK1) ou les circuits de freinage (BK1, BK2) peuvent être séparés de l'alimentation en pression (DV), plus particulièrement en cas de défaillance, au moyen d'une ou deux vannes de commutation (MVe, BP1, BP2), plus particulièrement « normalement fermées" ; et/ou

- les vannes de commutation électromagnétiques ($SV2K_{1-4}$) et/ou les entraînements de l'alimentation en pression (DV) présentent des enroulements et/ou des commandes au moins doublement redondants.

**17.** Système de freinage selon l'une des revendications précédentes, **caractérisé en ce que** les circuits de roue ($RK_{1-4}$) sont répartis sur deux circuits de freinage (BK1, BK2), et **en ce que** les deux circuits de freinage (BK1, BK2) sont connectés au moyen d'une ligne hydraulique, laquelle peut être coupée au moyen d'une vanne de séparation de circuit (BP1), et **en ce qu'**un des circuits de freinage (BK2) est connecté de manière fixe à l'alimentation en pression sans électrovanne intermédiaire, et **en ce que** l'autre circuit de freinage (BK1) est connecté au maître-cylindre (SHZ, THZ) via une connexion hydraulique (HL5), dans lequel cette connexion hydraulique (HL5) peut être coupée au moyen d'une vanne de commutation « normalement ouverte » (9).

**18.** Système de freinage selon l'une des revendications précédentes, **caractérisé en ce que** le système de freinage

a) ne présente que des cylindres de frein de roue ($RZ_{1-4}$) à actionnement purement hydraulique ; et/ou

b) présente à la fois des cylindres de frein de roue à actionnement purement hydraulique (RZ1, RZ2) et des freins de roue à actionnement électromoteur (EMB1, EMB2) ; et/ou

c) dispose d'un système de freinage anti-blocage (ABS) et/ou d'un programme électronique de stabilité (ESP) ou les simule.

**19.** Système de freinage selon l'une des revendications précédentes, **caractérisé en ce que** soit

- en cas de défaillance d'au moins un circuit de roue ($RK_{1-4}$), lors de l'apparition d'un moment de lacet, le contrôle du moment de lacet du système de stabilisation électronique (ESP) est utilisé ou intervient dans le contrôle de la pression ; et/ou

- une détection d'un changement de volume dans le maître-cylindre (SHZ/HZ), plus particulièrement dû à des non-étanchéités du maître-cylindre (SHZ/HZ) ou à une non-étanchéité de la vanne (9), est effectuée par comparaison permanente de la pression nominale dans le maître-cylindre (SHZ/HZ), laquelle est dérivée du déplacement mesuré de la pédale, avec la pression réelle dans le maître-cylindre (SHZ/HZ), et/ou qu'en cas de dépassement d'une valeur limite sélectionnable, une compensation du changement de volume est effectuée au moyen de l'alimentation en pression (DV) pour maintenir la caractéristique normale de la pédale de frein, dans lequel la régulation de pression dans le cylindre de frein de roue est interrompue pendant la compensation ; et/ou
- entre les vannes de commutation (SV2K$_{1-4}$) associées aux circuits de roue (RK$_{1-4}$) et l'alimentation en pression (DV), aucune autre vanne n'est prévue.

20. Système de freinage selon l'une des revendications précédentes, dans lequel le système de freinage comprend une vanne de commutation (SV2K$_{1-4}$), dans lequel la vanne de commutation (SV2K$_{1-4}$) est une électrovanne avec un entraînement électromagnétique (EM1), par lequel un organe de commande de vanne ou une tige de vanne (7) est réglable entre une position de vanne ouverte et une position de vanne fermée, **caractérisé en ce que** la vanne de commutation (SV2K$_{1-4}$) présente un dispositif de force supplémentaire (EM2, 9), qui exerce une force (FM2) sur l'organe de commande de vanne ou la tige de vanne (7) au moyen de son propre champ magnétique, dans lequel la vanne de commutation (SV2K$_{1-4}$) présente plus particulièrement un ressort de rappel (RF) qui exerce une force sur l'organe de commande de vanne ou la tige de vanne (7), laquelle empêche la fermeture brusque de la vanne, dans lequel, en option, la vanne de commutation (SV2K$_{1-4}$) est une vanne normalement ouverte en l'absence de courant ou une vanne normalement fermée en l'absence de courant, où « en l'absence de courant » signifie que l'entraînement électromagnétique (EM1) n'est pas alimenté en courant et/ou que la force (FM2) du dispositif de force supplémentaire (EM2, 9) peut être générée ou est générée au moyen d'un électroaimant pouvant être alimenté en courant et/ou d'un aimant permanent.

21. Système de freinage selon la revendication 20, **caractérisé en ce que** la force (FM2) du dispositif de force supplémentaire (EM2, 9) est opposée à la force (FM1) de l'entraînement électromagnétique (EM1), dans lequel, plus particulièrement, la force (FM2) du dispositif de force supplémentaire (EM2, 9) est équivalente à la force (FRF) d'un éventuel ressort de rappel (RF), et, avec un dimensionnement approprié du circuit magnétique, aucun ressort de rappel (RF) n'est nécessaire.

22. Système de freinage selon l'une des revendications 20 à 21, **caractérisé en ce qu'**avec le dispositif de force supplémentaire (EM1), une force (FM2) n'est générée par l'alimentation en courant de la bobine que si l'état du système de freinage laisse présager une fermeture involontaire de la vanne de commutation (SV2K$_{1-4}$), de sorte que le dispositif de force supplémentaire (EM1) ne consomme de l'énergie que dans un tel état et/ou la force de maintien électromagnétique est diagnostiquée via l'intensité du courant et le mouvement de l'induit au moyen de fonctions de diagnostic.

Fig. 1

Fig. 1a

EP 4 399 131 B1

Fig. 1b

Fig. 2

Fig. 2b

Fig. 2a

Fig. 2c

Fig. 2d

Fig. 3a          Fig. 3b          Fig. 3c

Fig. 3d

Diagnose während der Bremsung

Fig. 4a

Diagnose bei Fahrzeug Stillstand

Fig. 4b

Fig. 4 c1-c3

EP 4 399 131 B1

Fig. 4d

Fig. 4e

Fig. 4f

**EP 4 399 131 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017000472 A1
- DE 10202018213306
- DE 102017219598 A1